# EUROPEAN PATENT APPLICATION

(11) **EP 1 089 549 A2**
(43) Date of publication of application: **04.04.2001**
(21) Application number: 00121437.8
(22) Date of filing: 29.09.2000
(51) Int. Cl.: H04N 1/21

(54) **Printer device, printing method and printing system**

(30) Priority: 01.10.1999 JP 28140099
(71) Applicant: SONY CORPORATION, Tokyo (JP)
(72) Inventor: Ueda, Michitada, Shinagawa-ku, Tokyo (JP); Matoba, Masato, Shinagawa-ku, Tokyo (JP); Kuroda, Tatsuya, Shinagawa-ku, Tokyo (JP)
(74) Representative: Melzer, Wolfgang, Dipl.-Ing.

(57) **Abstract**

A printer device, a printing method and a printing system that can increase the convenience greatly in transmitting and receiving image data. In a printer system, image data is retrieved from a recording medium installed and the image data is transmitted to a receiving end, and the image data transmitted is received and the image data received is retained and the image data retained is retrieved, as required, based on which an image is printed. Also, in a printing system a network is established that connects a plurality of printing devices each other wherein each printer device retrieves image data from a recording medium installed, which is transmitted to a receiving and appointed, and receives the image data transmitted and retains the image data received, which is retrieved, as required, and based on which an image is printed.

## Description

### BACKGROUND OF THE INVENTION

### FIELD OF THE INVENTION

The present invention relates to a printer device, a printing method and a printing system, and more particularly, is suitably applied to an order/delivery system with the use of e.g. a digital printer.

### DESCRIPTION OF THE RELATED ART

Then placing an order for prints of the ordinary films (chlorobromide), conventionally a photographed film is taken to a photo shop for developing and printing, which is picked up on or after a date appointed.

More recently, with the advent of the digital still cameras capable of capturing pictures electronically, a new mode of printing service is available; a recording medium such as a memory card or floppy disk with pictures recorded on it or a digital still camera itself, is taken to a photo shop.

In such a conventional way, however, a user needs to take the trouble of going to a photo shop twice: first to place an order for prints and second to pick them up, which is troublesome as well as time consuming.

Also, in making an image processing such as synthesizing a captured image with other ones or processing hues, a user is required to purchase a piece of application software on the market with which to make necessary image processing at home and take a recording medium with image data processed as such to a photo shop to give an order for printing. In this case it is a prerequisite that he owns a personal computer.

Furthermore, even though home color printers are diffused more widely of late, it takes much time and trouble to print pictures in large quantities, which may give birth to a case where the costs of a printer and printing materials may be a great burden on a user.

Furthermore, to get printed pictures delivered to a person in a remote place, it is inevitable for the user, as mentioned above, to visit the shop again to pick up the printed pictures and pay for them. Then a user has to mail a package of pictures or recorded medium to a person in a remote place. Naturally the postage and an extra time are required until it is delivered to the right person.

In this case it is conceivable to transfer the image data of pictures to a remote place through networks such as the Internet, provided that both the sender and recipient of the image data have a personal computer and that a network must be established between them, of which cost may sometimes be a great burden on them.

### SUMMARY OF THE INVENTION

In view of the foregoing, an object of this invention is to provide a printer device, a printing method and a printing system with a significantly enhanced convenience in transmitting and receiving image data.

The foregoing object and other objects of the invention have been achieved by the provision of a printing system embodying the present invention comprises: a first retrieving means for retrieving a first image data from a recording medium installed on the system; a transmitting means for transmitting the first image data to a receiving end; a receiving means for receiving second image data to be transmitted; a retaining means for retaining the second image data received by the receiving means, a second retrieving means for retrieving; as required, the second image data retained in the retaining means; and a printing means for printing a picture based on the second image data retrieved from the retaining means by the second retrieving means.

As a result, with the use of the printer system, image data on the recording medium can be transferred to a receiving end appointed beforehand, which makes it easier to transmit/receive to/from a person in a remote place. At the same time it is also possible to print pictures on the spot based on the image data received, which enables a print order and delivery to be carried out simultaneously.

Also, in the present invention a network is established to have a plurality of printer devices connected each other, wherein each printer device comprises: a first retrieving means for retrieving first image data from the recording medium installed; a transmitting means for transmitting the first image data to a receiving end appointed; a receiving means for receiving second image data to be transmitted; a retaining means for retaining the second image data received by the receiving means; a second retrieving means for retrieving, as required, the second image data retained on the retaining means; and a printing means for printing pictures based on the second image data retrieved from the retaining means by the second retrieving means.

As a result, image data on the recording media can be transmitted to a receiving end appointed beforehand, which enables a user to transmit/receive to/from a person more easily in a remote place, and pictures to be printed on the spot based on the image data received. Consequently a printing order and delivery can be done simultaneously.

Also, in the present invention, a printing method of a printer device comprises: a first retrieving step of retrieving first image data from a recording medium installed; a transmitting step of transmitting the first image data to an receiving end appointed; a receiving step of receiving second image data to be transmitted; a retaining step of retaining the second image data received; a second retrieving step of retrieving, as required, the second image data stored; and a printing step of printing images based on the second image data retrieved as required.

As a result, with the use of the printing method, image data on the recording medium can be transferred to a receiving end appointed beforehand, which makes it easier to transmit/receive to/from a person in a remote place. At the same time it is also possible to print pictures on the spot based on the image data received, which enables a print order and delivery to be carried out simultaneously.

Also, in the present invention, a printing method of a printer device comprises: a first retrieving step of retrieving first image data from a recording medium installed; a transmitting step of transmitting the first image data to an receiving and appointed; a receiving step of receiving second image data to be transmitted; a retaining step of retaining the second image data received; a second retrieving step of retrieving, as required, the second image data stored; and a printing step of printing images based on the second image data retrieved as required.

Thereby, image data on the recording media can be transmitted to a receiving end appointed beforehand, which enables a user to transmit/receive to/from a person more easily in a remote place, and pictures to be printed on the spot based on the image data received. Consequently a printing order and delivery can be done simultaneously. Thus, the printing method of a printing device car be realized that increases the convenience greatly in transmitting and/or receiving image data.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig.1 is a block diagram of the configuration of the print service supply system in the present embodiment;
Fig.2 is a schematic perspective view of the external configuration of the print service supply system;
Fig.3 is a schematic perspective view of the external configuration of the print service supply system;
Fig.4 is a block diagram of the internal configuration of the print service supply system;
Fig.5 is a block diagram of the internal configuration of the personal computer;
Fig.6 is a flowchart used in explaining the operation processing procedure of the print service supply system;
Fig.7 is a schematic diagram of the initial image displayed on the monitor;
Fig.8 is a schematic diagram of the operation selection image displayed on the monitor;
Fig. 9 is a schematic diagram of the template setting image displayed on the monitor;
Fig.10 is a schematic diagram of the media selection image displayed on the monitor;
Fig.11 is a schematic diagram of the media insertion message display shown on the monitor;
Fig.12 is a schematic diagram of the message display during reading in data displayed on the monitor;
Fig.13 is a schematic diagram or the reception number input image displayed on the monitor;
Fig.14 is a schematic diagram of the memory number input image displayed on the monitor;
Fig.15 is a schematic diagram of the print selection image displayed on the monitor;
Fig.16 is a schematic diagram of the print setting image displayed on the monitor;
Fig.17 is a schematic diagram of the print setting image displayed on the monitor;
Fig.18 is a schematic diagram of the charge invoicing image displayed on the monitor;

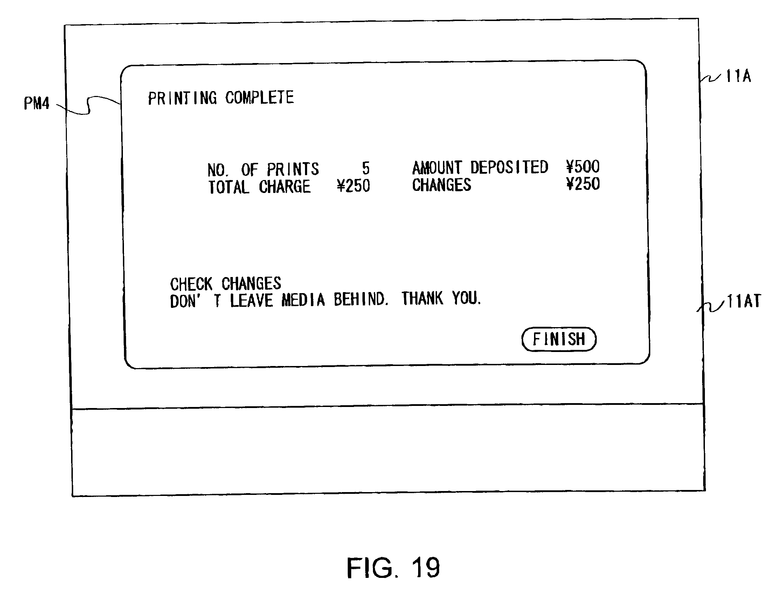

Fig.19 is a schematic diagram of the print complete image displayed on the monitor;
Fig.20 is a schematic diagram of the save setting image displayed on the monitor;
Fig.21 is a schematic diagram of the transmitting image selection image displayed on the monitor;
Fig.22 is a schematic diagram of the transmitting end selection image displayed on the monitor;
Fig.23 is a schematic diagram of the transmitting end selection image displayed on the monitor;
Fig.24 is a schematic diagram of the transmitting end selection image displayed on the monitor;
Fig.25 is a schematic diagram of the transmitting end continuation image displayed on the monitor;
Fig. 26 is a schematic diagram of the memory number setting image displayed on the monitor;

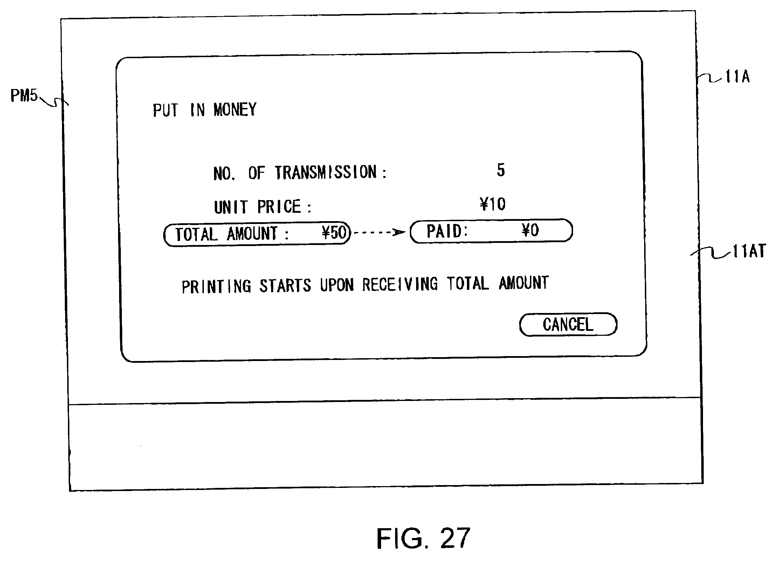

Fig.27 is a schematic diagram of the charge invoicing image displayed on the monitor;

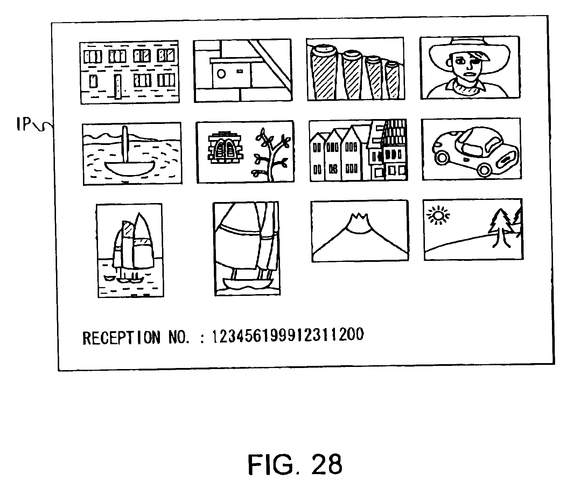

Fig.28 is a schematic diagram of the configuration of the reception index;
Fig.29 is a flowchart used in explaining the transmit processing procedure for the print service supply system and print ordering system;
Fig.30 is a flowchart used in explaining the receive processing procedure of the print service supply system;
Fig.31 is a schematic perspective view of the external configuration at the print ordering system;
Fig.32 is a schematic perspective view of the external configuration of the print ordering system;
Fig.33 is a block diagram of the internal configuration of the print ordering system;
Fig.34 is a block diagram of the internal configuration of the personal computer;
Fig.35 is a schematic diagram of the layout of the receipt; and
Fig.36 is a flowchart used in explaining the operation processing procedure of the print ordering system.

### DETAILED DESCRIPTION OF THE EMBODIMENT

Preferred embodiments of this invention will be described with reference to the accompanying drawings:

### (1) The overall configuration of a printing system in the present embodiment.

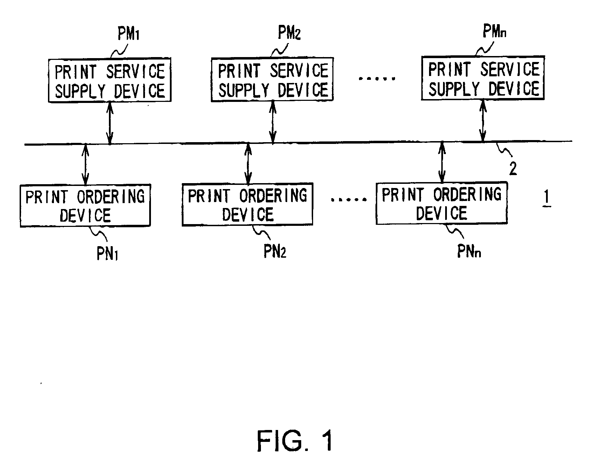

In Fig.1, 1 is a printing system in whole in one mode of carrying out the present invention, comprising a plurality of print service supply systems PM₁, PM₂ to PMₙ for printing images captured electronically on different media (not shown in Fig.) by, for example, a digital still camera (not shown in Fig.) and a plurality of print ordering devices PN₁, PN₂ to PNₙ, which are connected each other through such a network as the Integrated Services Digital Network (ISDN).

These print service supply systems PM₁ to PMₙ and print ordering devices PN₁ to PNₙ are installed at such places convenient for users as convenient stores and wickets of stations, etc.

In this case each or print ordering devices PN₁ to PNₙ is designed such that information necessary for placing an order for digital printing is transmitted, through a network 2, to all the print service supply systems PM₁ to PMₙ appointed by the user.

Also, each of the print service supply systems PM₁ to PMₙ is designed such that information for placing an order for digital printing can be transmitted/received to/from other print service supply systems each other, and that information transmitted from a print ordering device PN₁ to PNₙ for placing an order for digital printing can be received.

### (2) Configuration of the print service supply system

### (2-1) External configuration

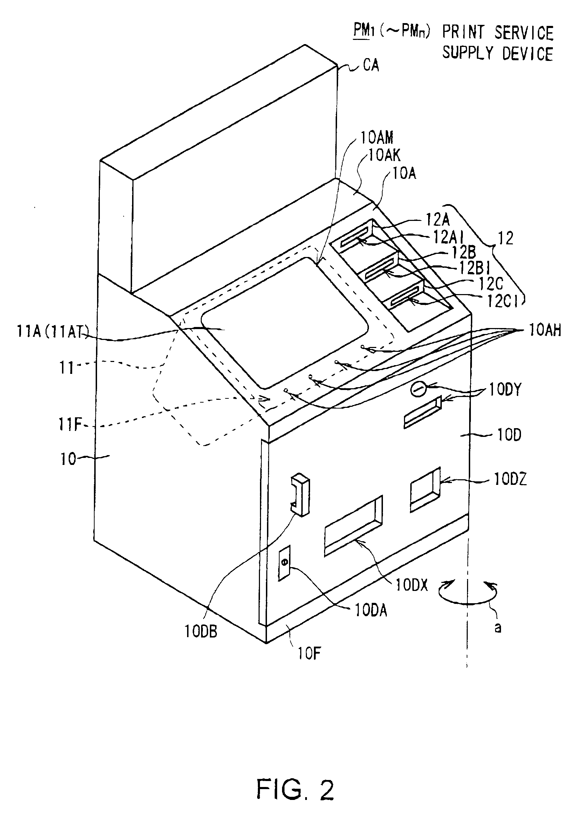

As shown in Fig.2, each of print service supply system PM₁ to PMₙ has a signboard CA on the upper part 10AK of a housing 10 as well as the monitor 11A of a display unit 11 and a media unit 12 on the slope 10A.

For a display unit 11 the print service supply system PM₁ to PMₙ uses a display unit (available on the market, as is) having the monitor 11A with a touch panel 11AT and a plurality of press-type adjusting buttons (not shown in Fig.) for image adjustments placed at the lower part of the display unit. The monitor 11A of the display unit 11 is housed in the housing 10 in a way that it is exposed through the opening 10AM with a given size formed on the slope 10A of the housing 10.

In this case holes 10AH with a given diameter (e.g. 1mm approx.) are made on the elope 10A of the housing 10, corresponding to the adjustment buttons of the display unit 11. As a result, a service person can make various image adjustments on the monitor 11A for maintenance, with the use of a pin, for example, pressing a button 10AH assigned for a corresponding adjustment.

Furthermore, media insertion units 12A to 12C are placed on the media unit 12, which correspond to different recording media (not shown in Fig.). A user inserts his/her medium into an insertion inlet 12AI to 12CI of the media insertion unit 12A to 12C suitable for it. In this way, recording media can be reproduced by means of a driver (not shown in Fig.) incorporated into the media insertion unit 12A to 12C.

The front portion 10F of the housing 10 forms a door unit 10D which opens or closes, rotating flexibly in the direction of the arrow 'a' with one end as the center of rotation. Since a lock 10DA and a handle 10DB are provided at the other end of the door unit 10D, the door unit 10D, when locked, can be prevented from being forced open intentionally by any other person than a serviceperson, except when he/she may open the door 10D for maintenance.

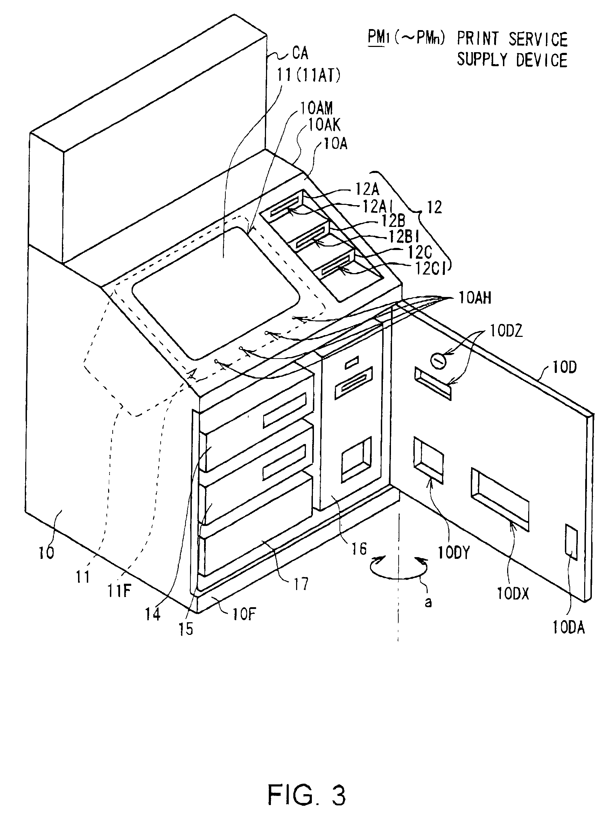

As actually shown in Fig.3, while carrying out maintenance service, a serviceperson can confirm with the eye, with the door unit 10D closed, the display unit 11 and the media unit 12 placed on the upper part of the inside of the housing 10 as well as a personal computer (not shown in Fig.), first and second printers 14, 15, a charging unit 16 and power supply unit 17 placed on the lower part of the inside of the housing 10.

The door unit 10D comprises a card discharge outlet 10DX, money payment inlet 10DY and money discharge outlet 10DZ placed at the corresponding positions inside of the housing 10 where the first and second printers 14, 15, and charging unit 16 are mounted respectively. Printing media (postcards, seals, etc.) can be taken out at either the first or second printers 14, 15 through the card discharge outlet 10DX. Bills and coins can be put into or taken out of the money payment inlet 10DY or the money discharge outlet 10DZ respectively, controlled by the charging unit 16.

Furthermore, in the case of the present embodiment the housing 10 is connected to the network 2 (Fig.1) by a cable (not shown in Fig.), which enables the print service supply system PM₁ to PMₙ and print ordering device PN₁ to PNₙ to communicate each other.

### (2-2) Internal configuration

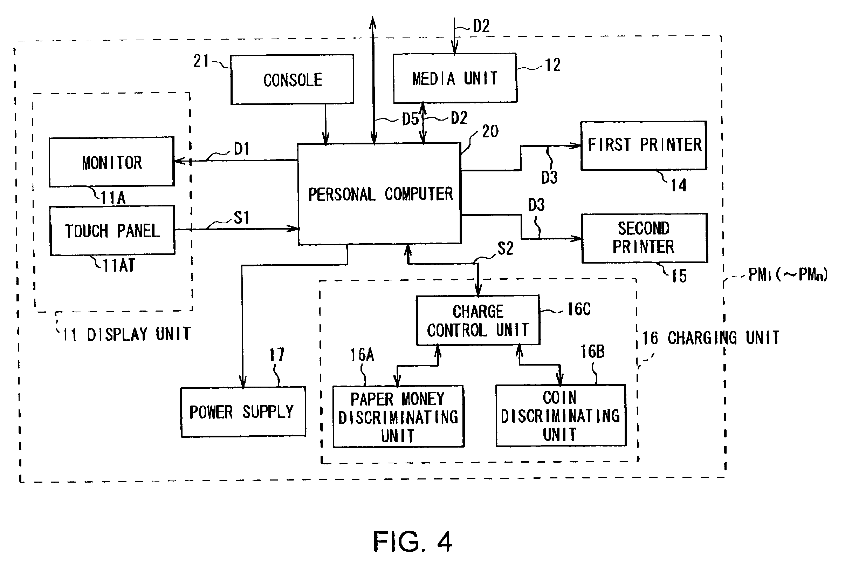

As shown in Fig.4, the print service supply systems PM₁ to PMₙ comprises a personal computer 20, display unit 11 consisting of the monitor 11A with the touch panel 11AT, first and second printers 14, 15, media unit 12 composed of drivers for the different recording media, charging unit 16 consisting of a charge control unit 16C, bill discriminator 16A and coin discriminator 16B, power supply 17, and operation unit 21 consisting of a mouth or keyboard for maintenance service.

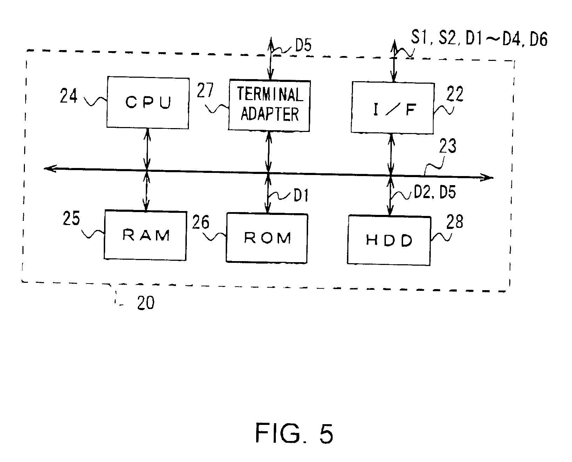

Also, as shown in Fig.5, the personal computer 20 comprises a Central Processing Unit (CPU) 24, Random Access Memory (RAM) 25, Read Only Memory (ROM) 26, terminal adapter 27, hard disk drive 28, and an interface circuit 22, all of which are connected each other by means of a bus 23.

Based on a given operational program retained in the ROM 26, the CPU 24 captures various commands S1 fed through the touch panel 11AT, a payment continuation signal S2 fed from the charge unit 16 generated when money is put into the money payment inlet 10DY (Fig.2) and image data D2 of various recording media retrieved by the media unit 12 and maintenance operation data given through the operation unit 21. The CPU 24 also captures image data D5 transmitted from another print service supply system PM₁ to PMₙ or print ordering device PN₁ to PNₙ by way of a terminal adapter 27 and bus 23.

In practice, the CPU 24 is designed such that a working program retained in the ROM 26 is retrieved and read into the RAM 25, based on which operational processing starts when a medium is inserted into the media insertion unit 12A to 12C of the media unit 12, or when image data is received from another print service supply system PM₁ to PMₙ or print ordering device PN₁ to PNₙ by way of the terminal adapter 27 along with a command given by a user. Then the CPU 24 retrieves the contents of a print picture, records and transmission, and operational image data D1 from the ROM 26, which are fed to the monitor 11A by way of the bus 23 and interface circuit 22.

At this stage the CPU 24 makes a backup by once recording on the hard disk drive 28 all of image data D2 based on a medium inserted into the media insertion unit 12A to 12C, or image data D5 received from another print service supply cysts PM₁ to PMₙ or print ordering device PN₁ to PNₙ. Each recording medium inserted into the media insertion unit 12A to 12C is taken out after the backup is completed.

The hard disk 28 stores the terminal ID (6 bytes) of print service supply system PM₁ to PMₙ itself as terminal registration database, name of installation place (20 bytes), telephone number (15 bytes) as well as transmit database and receive database.

The transmit database is composed of the telephone number or a receiving end (15 bytes), a reception number (18 bytes, to be described later) including the terminal ID (6 bytes) and the date of transmission process, a memory number (4 bytes) or password for security purposes, and image data to be transmitted, and the receive database of a reception number (18 bytes) of a transmitting end, memory number (4 bytes) and image data.

In this way the hard disk drive 28 stores image data to be transmitted to another print service supply system PM₁ to PMₙ based on the terminal, registration database as well as image data D5 received from another print service supply system PM₁ to PMₙ or print ordering device PN₁ to PNₙ.

The CPU 24 starts controlling the charging unit 16 when a user puts bills or coins into the charge payment inlet 10DY placed at the front 10F of the housing 10. That is, the charging unit 16 incorporates a bill discriminator 16A for recognizing the kinds of bills and counting the number by the kind and the coin discriminator 16B for recognizing the kinds of coins and counting the number by the kind. The charge controller 16C judges, under the control of the CPU, if the total amount put in through the bill discriminator 16A and the coil discriminator 16B is larger than that preset for the contents of process on the touch panel 11AT by a user.

The charge control unit 16C transmits a charge confirmation signal S2 to the CPU only when the total amount put in is larger than that preset on the touch panel 11AT, and it the amount paid is larger than that preset, a difference is discharged at the money discharge outlet 10DY placed at the front 10F of the housing 10 by way of the bill discriminator 16A or/and coin discriminator 16B.

When the charge confirmation signal S2 is given, the CPU 24 starts a processing operation according to the contents selected by a user for processing. In case a user chooses printing process, the CPU 24 starts printing operation, controlling either the first printer 14 or second printer 15 on which a printing medium (postcard, seal) is mounted, which coincides with the printing contents appointed by a user. In case a user chooses image recording process, the media unit 12 is controlled to start the recording operation, and if a user chooses image transmission process, appointed image data is transmitted to a receiving end appointed by a user through the terminal adapter 27, and the hard disk drive 28 is controlled to store the image data in the database for transmission.

In this case a postcard and a piece of seal is mounted on the first and second printers 14, 15 respectively as printing medium, and under the control of the CPU 24 based on the operation with use of the touch panel 11AT of the Graphical User Interface (GUI) (described later) displayed on the monitor 11A, either the first or second printer 14, 15 prints image data D3 on the postcard or seal corresponding to the image contents appointed by a user, which is transferred to the card discharge outlet 10DX placed on the front 10F of the housing 10.

A recording medium (memory stick, compact flash, smart medium, floppy disk, compact disk, or PC card, etc.) is inserted into each of the media insertion unit 12A to 12C of the media unit 12. Thus, under the control of the CPU 24 based on the operation with use of the touch panel 11AT of GUI display (described later) appearing on the monitor 11A, the driver of the media insertion unit records recording data D4 on the recording medium, corresponding to the recording contents appointed by a user. The recorded medium is discharged from the insertion outlet 12AI to 12CI of the media insertion unit 12A to 12C placed on the slope 10A of the housing 10.

In addition to those functions, under the control of the CPU 24 based on the operation with use of the touch panel 11AT of the GUI display (described later) appearing on the monitor 11A, the CPU 24 sends out the image data of a picture selected by a user from among those based on the image data D2 retrieved from the recording medium saved on the hard disk drive 28 to another print service supply system PM₁ to PMₙ appointed by the user as image data D5 for transmission by way of the bus 23, terminal adapter 27 and network 2 (Fig.1) in order.

### (2-3) Operation processing procedure in the print service supply system

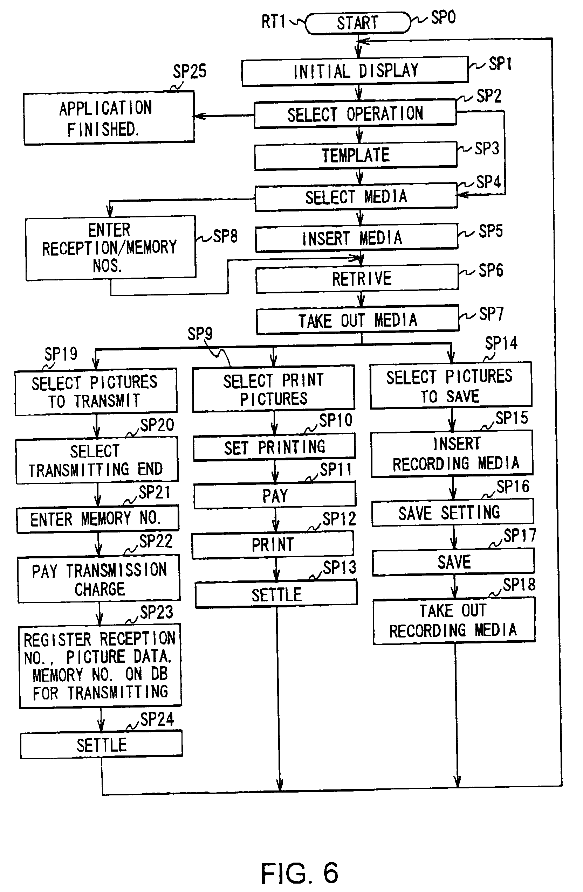

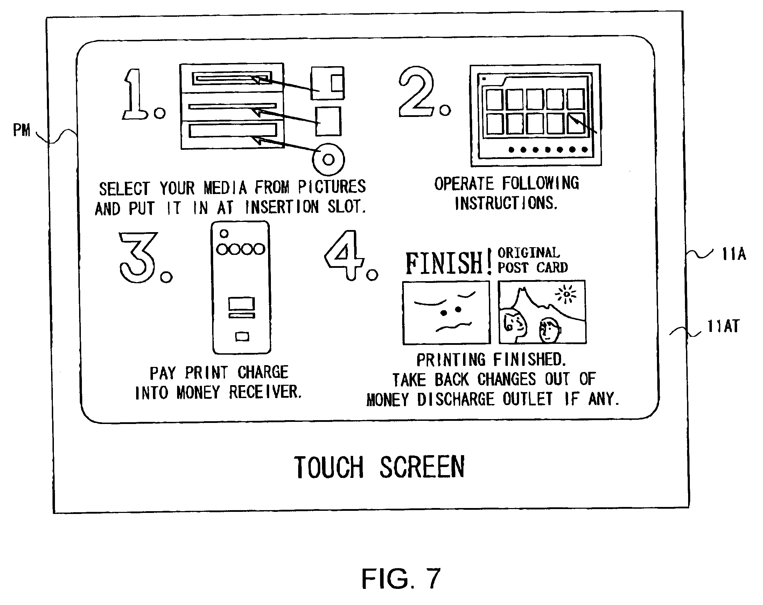

In practice, with the print service supply system PM₁ to PM_{n,} when a user touches the touch panel 11AT of the display unit 11, the CPU 24 moves from the step SP0 to the operation processing procedure RT1 as shown in Fig.6, and again when the user touches, through the touch panel 11AT, the initial image PM displayed on the monitor 11A of the display unit 11 as shown in Fig.7 at the next step SP1, the CPU 24 proceeds to the step 2.

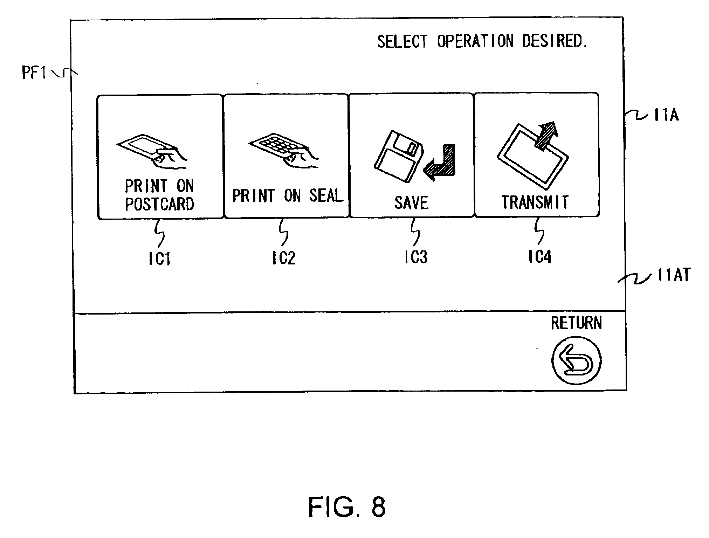

At the step SP2 the CPU 24 makes the monitor 11A display an operation selection picture PF1 composed of icons IC1 to IC4 showing the service menu such as 'Print on postcard', 'Print on seal', 'Save on another recording medium' and 'Transmit to another print service supply system' as shown in Fig.8.

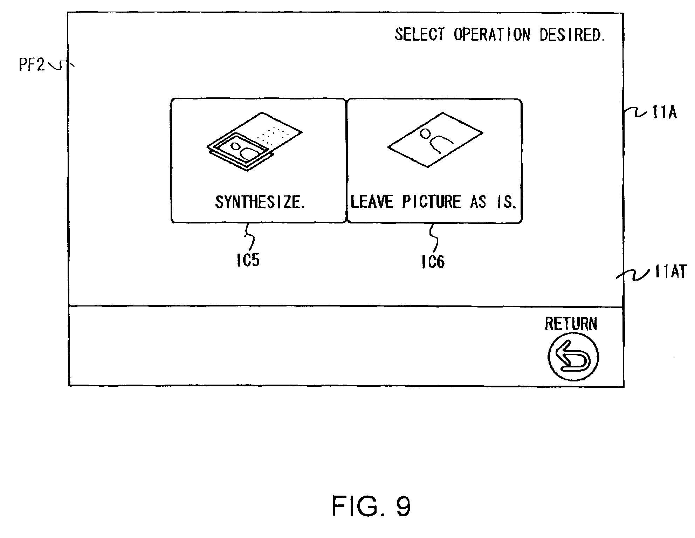

When one of the icons IC1 to IC4 on the operation selection picture PF1 is selected by the user at the step SP2, the CPU 24 makes the monitor 11A display icons IC5, IC6 as template setting picture PF2 in the service mode selected as shown in Fig.9, which asks the user whether or not the pictures be synthesized.

The CPU 24 proceeds to the next step SP3 when the icon IC5 is selected from the template setting picture PF2 and makes the monitor 11A display a template selection picture (not shown in Fig.) composed of a plurality of icons indicating synthesizing elements (templates).

When one of a plurality of template icons on this template selection image is selected by the user, the CPU 24 once stores this information in a RAM 25 and makes arrangements for a synthesized picture based on the template to be used at later steps, and proceeds to the next step SP4.

If, however, the icon IC6 is selected from the template setting image RF2 at the step SP2, the CPU 24 proceeds to the step SP4 without doing anything.

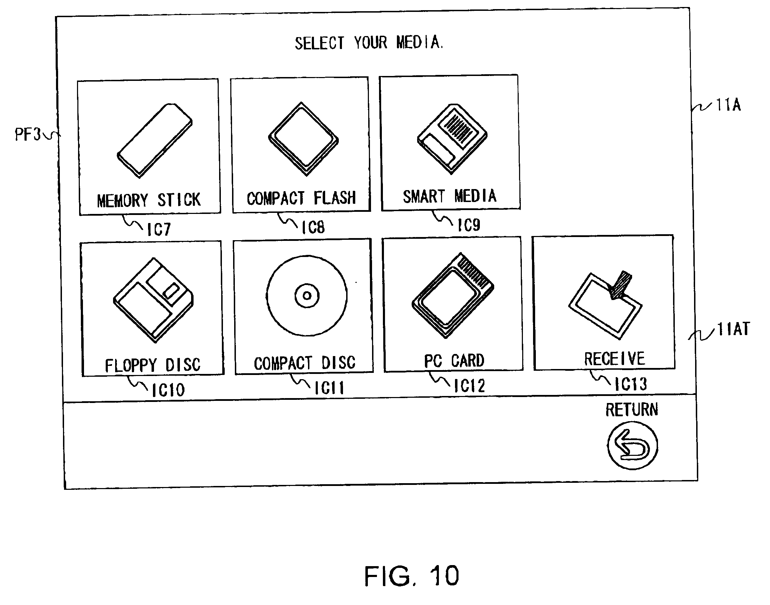

At the step SP4, the CPU 24 makes the monitor 11A display a media selection image PF3 listing icons IC7 to IC13 corresponding to the types of recording media usable as shown in Fig.10 (memory stick, compact flash, smart medium, floppy disk, compact disk, PC card, and 'Receive image data')

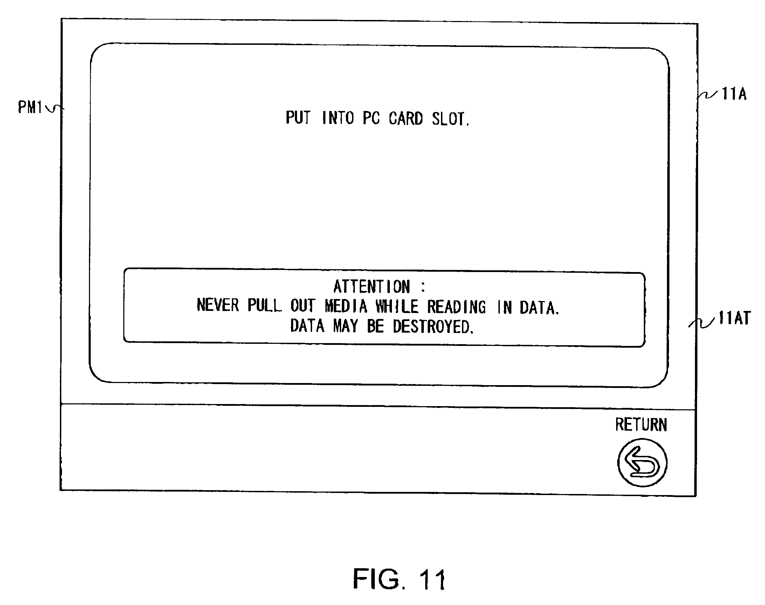

It, for example, a user selects an iccn (e.g. PC card IC12) corresponding to a desired recording medium from the media selection image RF3 displayed on the monitor 11A, the CPU 24 proceeds to the step SP5 and makes the monitor 11A display a message PM1 to the effect 'Insert a recording medium (PC card)' corresponding to the icon IC12 as shown in Fig.11.

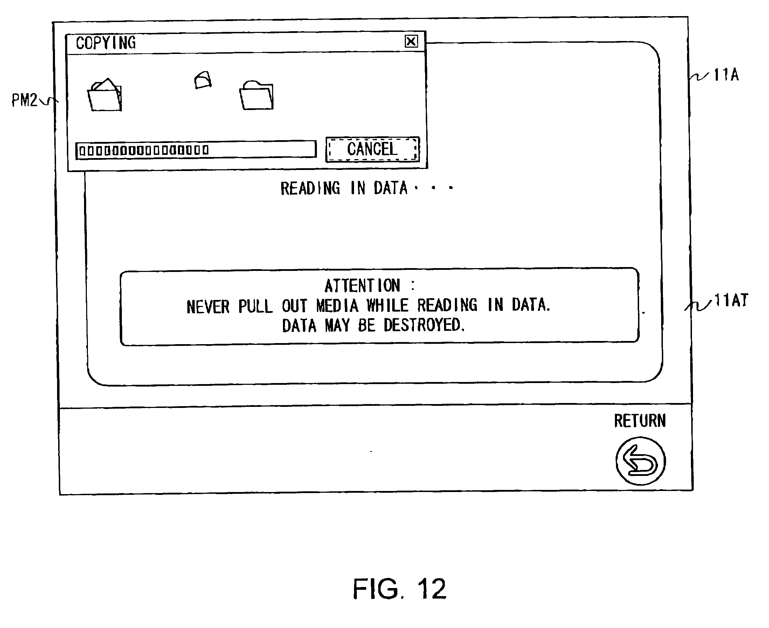

When a recording medium selected is inserted into the media insertion unit 12A to 12C by the user, the CPU 24 proceeds to the step SP6 and retrieves image data D2 recorded on the recording medium, controlling the reproduction driving system in the media insertion unit 12A, and produces a backup by once recording all of the image data D2 on the hard disk device 28. The CPU 24 makes the monitor 11A display a message PM2 to the effect 'Reading data' as shown in Fig.12.

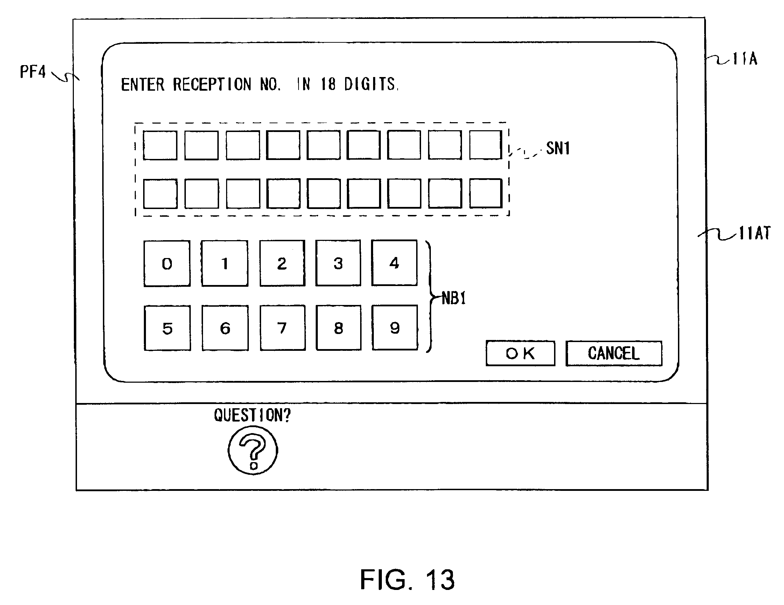

If the user selects an icon IC13 corresponding to 'Receive image data' from the media selection image PF3 displayed on the monitor 11A at the step SP4, the CPU 24 proceeds to the step SP8 and makes the monitor 11A display a reception number input image RF4 corresponding to the icon 13 as shown in Fig.13.

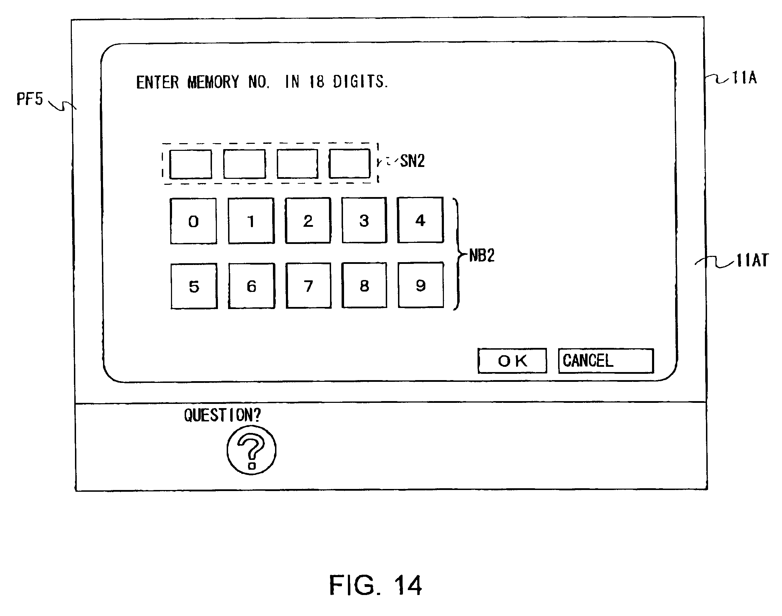

The reception number input image RF4 includes a number input area NB1 consisting of the digit "0" to "9" and a number display area SN1 for displaying a reception number composed of e.g. 18 digits entered through the number input area NB1. When a given number is entered by the user through the number input area NB1, the CPU 24 makes the monitor 11A display a memory number input image PF5 as shown in Fig.14.

The memory number input image PF5 includes a number input area NB2 consisting of the digit buttons "0" to "9" and a number display area SN2 for displaying a memory number composed of e.g. 4 digits entered through the number input area NB2 as a password for security purposes. When a desired number is entered by the user through the number input area NB2, the CPU 24 proceeds to the subsequent step SP6.

Controlling the hard disk 28 at the step ST6, the CPU 24 then searches and retrieves the contents of reception (image data D5, etc.) based on the reception number and memory number entered by the user from the contents of reception stored in the receive database on the hard disk drive 28 and makes the monitor 11A display a message PM2 to the effect 'Retrieve data' of a similar structure as in Fig.12.

Upon retrieving the image data from the receive database on the recording medium or hard disk 28 at the step SP6, the CPU proceeds to the step SP7 and makes the monitor 11A display messages to the effect 'Backup on the hard disk complete', and 'Take out the medium' in case a recording medium is installed.

If the recording medium is taken out of the media insertion unit 12A to 12C by the user, or if the image data D5 received from the receive database of the hard disk drive 28 is retrieved, the CPU 24 proceeds to the step SP9 and makes the monitor 11A display a print image selection image PF6 if the icon IC1 or IC2 showing 'Print on postcard' or 'Print on seal' is selected at the step SP2.

A plurality of images based on the image data recorded on the recording medium are displayed by the given number (e.g. 10) as thumbnail images TNA1 to TNA10 on the print image selection image PF6. Placed below each thumbnail image TNA1 to TNA10 are the operation buttons CB1 to CB4 by which to select any number of images freely from among all the images. Of them the CB1 and CB2 are buttons by which to shift to the next 10 images back or forward respectively, The button CB3 is for selecting all the images and the button 4 for finishing the selection of images.

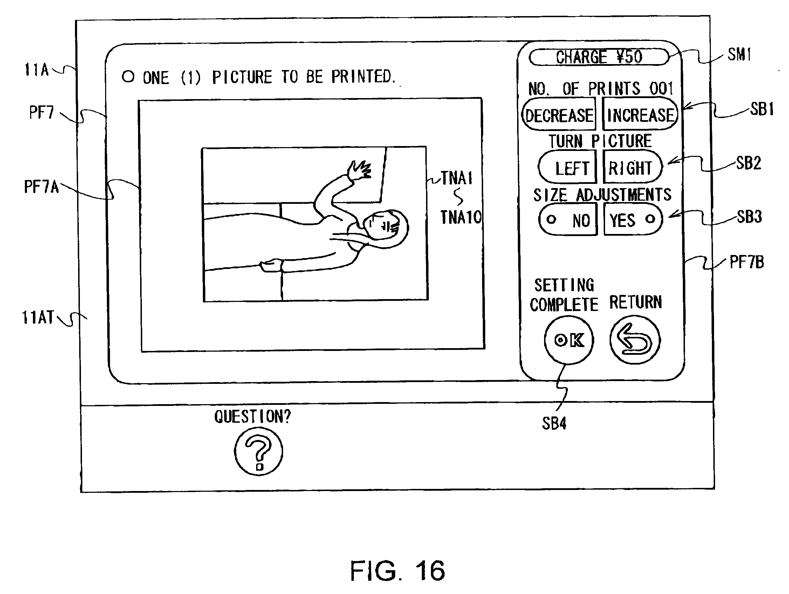

When all the images desired are selected from among a plurality of thumbnail images TAN1 to TNA10 appearing on the monitor 11A, the CPU proceeds to the step SP10, and makes the monitor 11A display a print setting image PF7 as shown in Fig.16.

The print setting image PF7 displays the thumbnail image TNA1 to TNA10, enlarged to a given size, one by one within an image frame PF7A of a given size. A setting image PF7B for setting the print contents (a number of pictures, rotation of pictures, size adjustments) is displayed adjacent to the image frame PF7A.

Placed on the setting image PF7B are increase/decrease buttons SB1 for setting the number of prints, rotation buttons SB2 for rotating an image by the unit of 90° left or right, setting buttons SB3 for determining if the size of an image should be adjusted to that of the printing medium, and a button SB4 for terminating all of these operations. Furthermore, displayed above the setting image PF7B is an amount set in the form of a charge display image SM1, according to the number of prints.

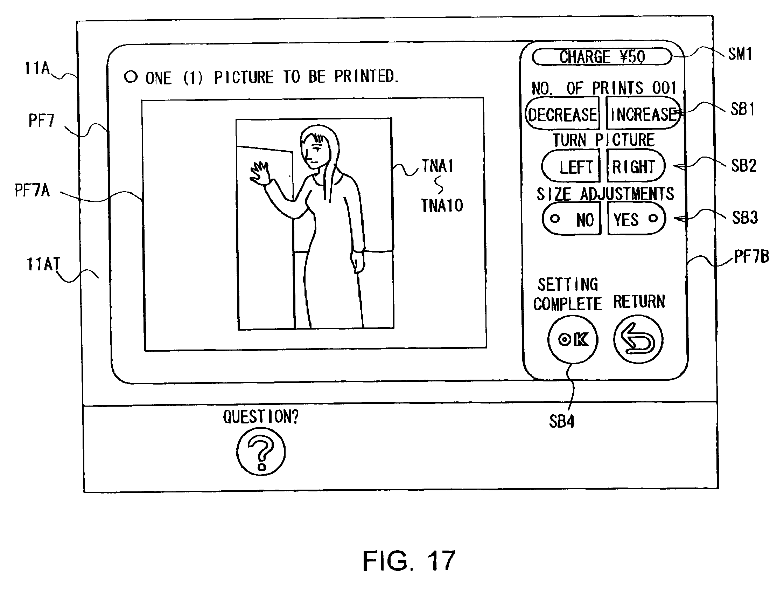

When the button 'To left' of the rotation buttons SB2 is pressed, the thumbnail image TNA1 to TNA10 displayed in the image frame PF5A is shown in a state where it it rotated 90° to left within the image frame PF7A as shown in Fig.17.

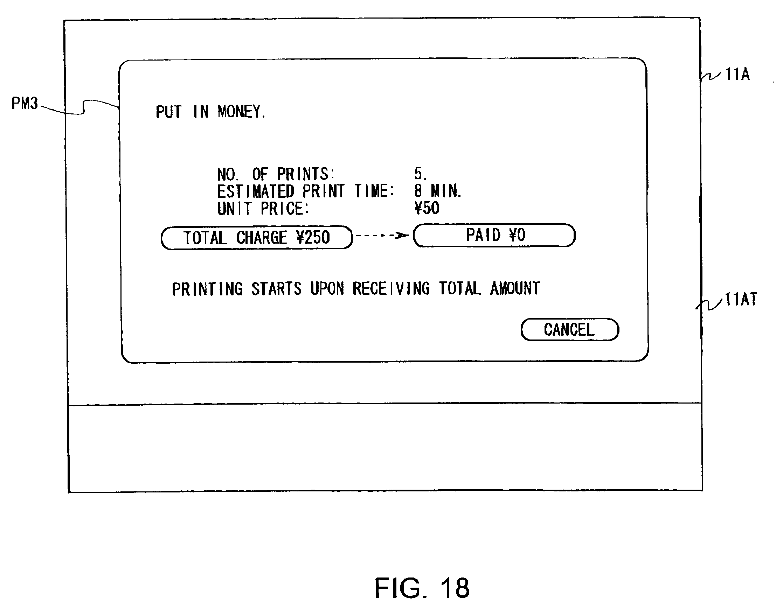

When it is confirmed that the printing contents are set to all the thumbnail images TNA1 to TNA10 by the user, the CPU 24 proceeds to the step SP11 and makes the monitor display a charge invoicing image PM3 as shown in Fig.18 as well as the charge as a message, according to the number of prints per printing medium (postcard, seal) selected by the user.

If the charge control unit 16C confirms that an amount (bills and/or coins) larger than that set by the user is put into the money payment inlet 10DZ, the CPU 24 proceeds to the step SP12 and starts printing operation controlling either of the first or second printer 14, 15 on which a medium selected by the user is mounted.

Upon completion of the printing operation by either the first or second printer 14, 15, at the step SP12, the CPU 24 proceeds to the step SP13 and makes the monitor display the difference between a total amount thrown in and a set amount, according to the judgment of the charge control unit 16 and a message 'Printing Complete' within the print complete frame PM4. Furthermore, the CPU 24 settles the payment discharging changes through the money discharge outlet 10DY placed at the front of the housing, controlling the charging unit 16.

Then, the CPU 24 returns to the step SP1.

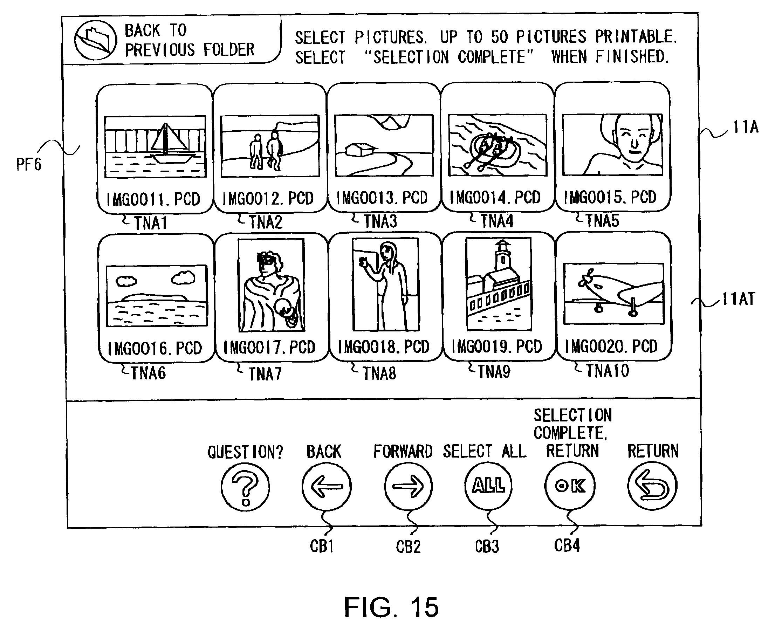

In case the icon IC3 indicating 'Save on another recording medium' is selected at the step SP2, the CPU 24 proceeds from the step SP7 to the step SP14 and makes the monitor 11A display a saving image selection picture (not shown in Fig.) in a structure similar to that in Fig.15.

A plurality of images based on the image data D2 recorded on the recording medium are displayed on the save image selection picture as thumbnail images by the given number, e.g. 10. Displayed below each thumbnail image is an operation button for selecting any number or images freely.

When all the images desired are selected from among a plurality of the thumbnail images displayed on the monitor 11A, the CPU 24 proceeds to the step SP15 and makes the monitor 11A display a massage to the effect 'Insert a recording medium (e.g. floppy disk)'.

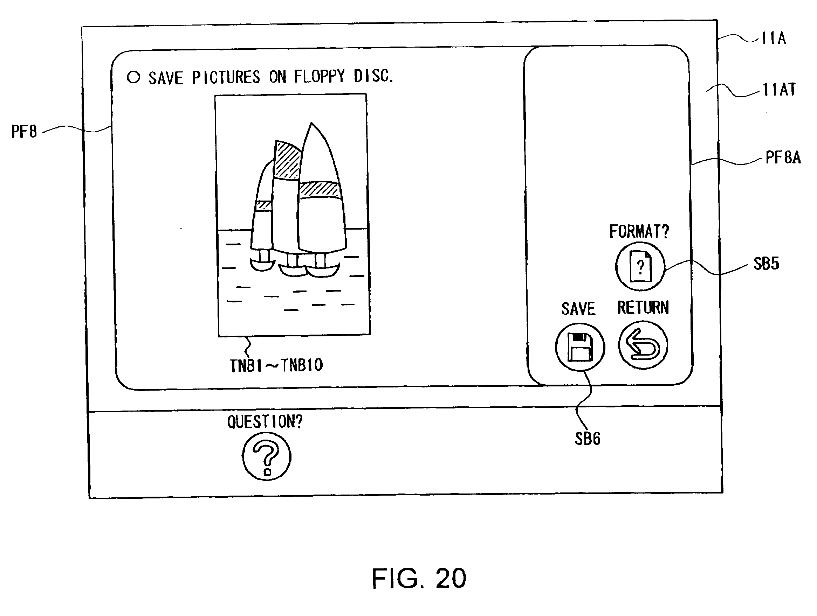

When a corresponding medium is inserted into the media insertion unit 12A to 12C by the user, the CPU proceeds to the step SP16 and makes the monitor 11A display a save setting image PF8 as shown in Fig.20.

The save setting image PF8 displays each thumbnail image one by one, enlarged to a given size as well as a setting image PF8A for setting saving contents, adjacent to the thumbnail image. Formed on the setting image PF8A are a format setting button SB5 for setting a saving format for a plurality of still image files [e.g. joint photographic coding experts group (JPEG), tag image file format (TIFF) and bitmap (BMP), etc.], and a save button SB6 for excuting saving.

When it is confirmed that the user has set saving contents for all the thumbnail images, the CPU 24 proceeds to the step SP17 and the saving contents are recorded on a floppy disk, controlling the recording system (not shown in Fig.) in the media insertion unit 12A to 12C.

The CPU 24 proceeds to the step SP18 and makes the monitor 11A display a message to the effect 'Take out the floppy disk' and again returns to the step SP1 after confirming that the floppy disk is taken out by the user.

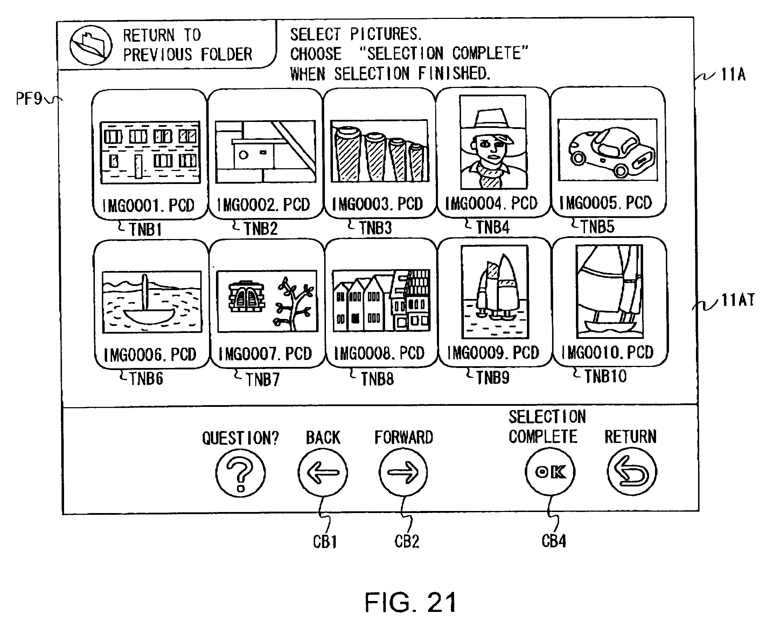

If, however, the icon IC4 indicating 'Transmit to another print service supply system' is selected at the step SP2, the CPU 24 proceeds from the step SP7 to the step SP19 and makes the monitor 11A display a transmitting image selection picture PF9 as shown in Fig.21.

A plurality of images based on the image data D2 recorded on the recording medium are displayed on the transmit image selection picture PF9 by the given number (e.g. 10 pieces) as thumbnail images TNB1 to TNB10. Displayed below each thumbnail image TNB1 to TNB10 are the buttons CB1, CB2 and CB4 of the operation buttons CB1 to CB4 for selecting from among all the images freely.

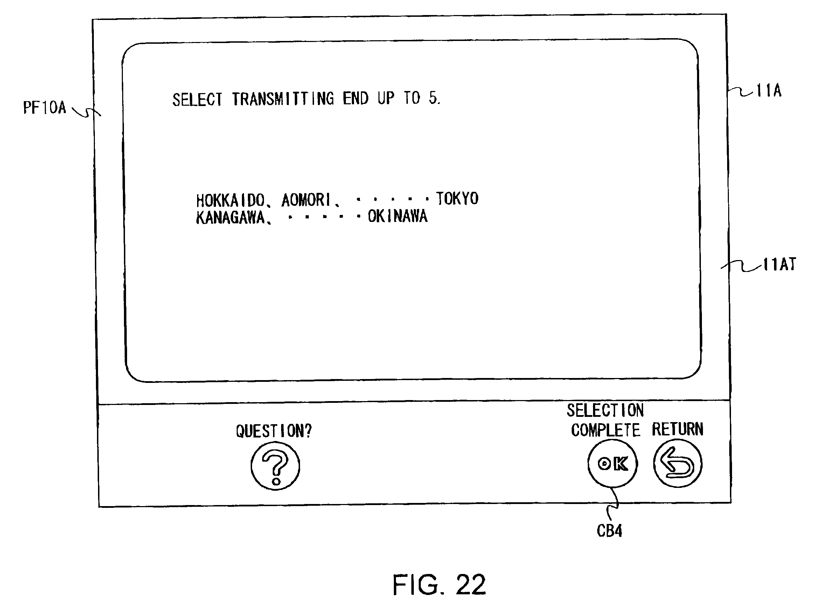

When all the images desired are selected by the user from among a plurality of the thumbnail images TNB1 to TNB10 displayed on the monitor 11A, the CPU 24 proceeds to the step SP20 and makes the monitor 11A display a first receiving end selection image PF10A for transmitting images selected as shown in Fig. 22.

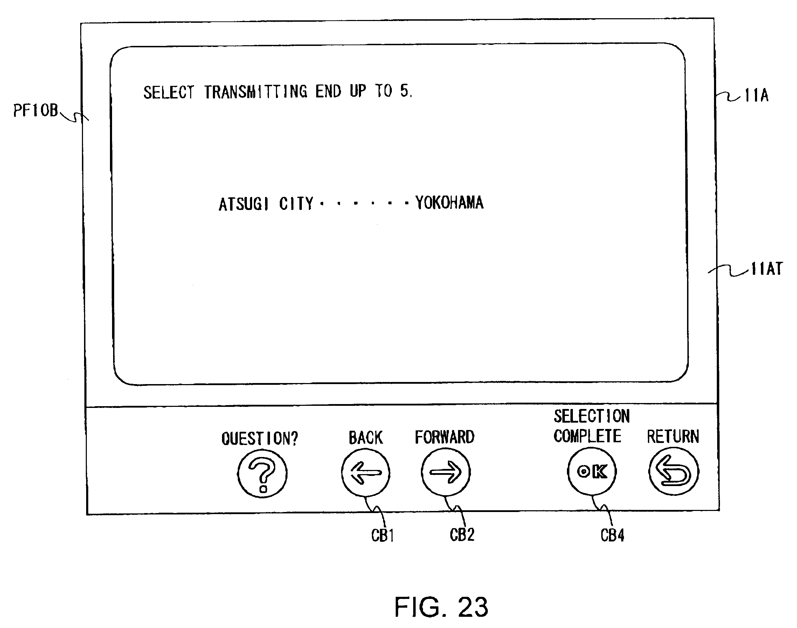

All the prefectures (including to,do,fu) in Japan are displayed on the first transmitting end selection image PF10A, and when the user selects a prefecture desired, the second receiving end selection image PF10B appears for selecting a town as shown in Fig.23, and all the towns in the prefecture selected are displayed on it.

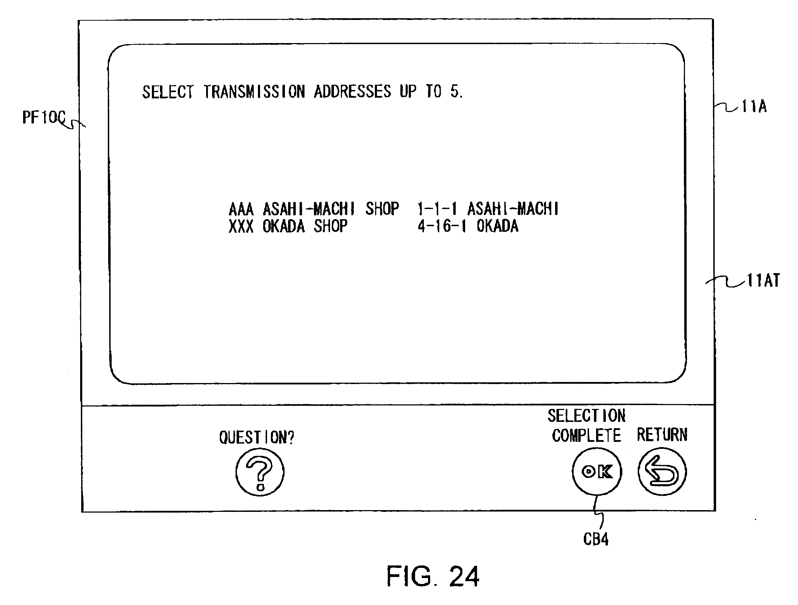

The selection of a desired town by the user brings a third receiving end selection image PF10C ror selecting a shop's name and address, e.g. a convenience store where a print service supply system PM₁ to PMₙ is installed as shown in Fig.24, with all the shop's name and addresses in the town displayed on it, where a print service supply system PM₁ to PMₙ is installed.

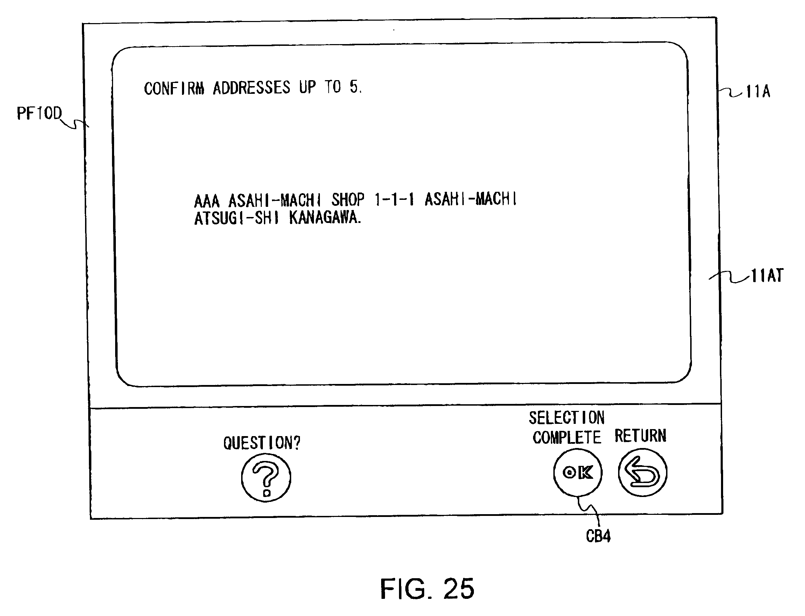

With the receiving end selection image PF10A to PF10C operated with the use of the operation buttons CB1, CB2 and CB4 in order, as required, the CPU displays an address (place) where a print service supply system PM₁ to PMₙ is installed as a receiving end confirmation image PF10D as shown in Fig.25.

With a desired receiving end confirmed by the user on the receiving end confirmation image PF10D, the CPU 24 registers the confirmed receiving end with 'selection complete' appointed, with the use of the selection complete button CB4.

The CPU is capable of registering receiving ends up to 5, with the receiving end selection image PF10A to PF10C and receiving end confirmation image PF10D operated in order 5 times.

In the can of the present embodiment, the user can set 5 receiving ends at the maximum at one time and select and determine a receiving end from among those displayed (names of prefectures, including to, do, and fu). However, the present invention is not limited to it, but a plurality of other receiving ends can be appointed. Also, if the kana letters (typical Japanese letters) are made available for selection and appointment, the convenience in operation can be enhanced in the interest of users.

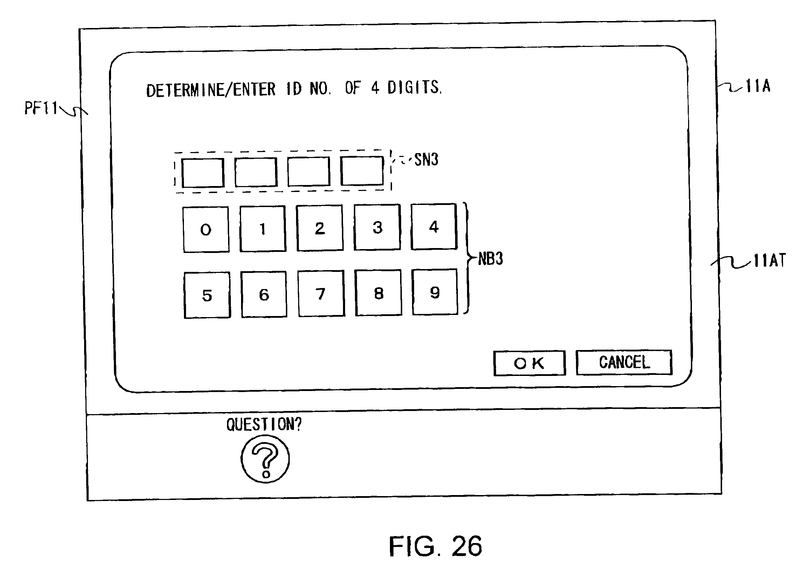

The CPU 24 proceeds to the next step SP21 and turns on the memory number setting image PF11 as shown in Fig.26 on the monitor 11A. The memory number setting image PF11 comprises a number input area NB3 composed of the digits "0" to "9" and a number indication area SN3 for indicating a memory number composed of four (4) digits entered through the number input area NB3, which works as a password for security purposes. When a desired number is entered by the user through the number input area NB3, the CPU 24 registers that number as a memory number and proceeds to the next step SP22.

The memory number is provided for security purposes to prevent a happening that the image data of a picture whose contents are confirmed between a transmitting end and receiving end, is retrieved by any other third party than a sender and a receiver.

The CPU 24, at this step SP22, makes the monitor 11A display a charge invoicing image PM5 indicating a charged amount in message style set according to the number of pictures selected and transmitted by the user.

When it is confirmed by the charge control unit 16C that an amount of money (bills or coins) larger than that set by the user is paid into the charge payment inlet 10DZ, the CPU 24 proceeds to the step 23 and steros the contents of transmission appointed by the user along with a reception number occurring at this time, into the transmit database of the terminal registration database in the hard disk drive 28.

Upon completing the storing process into the hard disk drive 28, the CPU 24 proceeds to the step SP24 and makes the monitor 11A display a difference between the total amount paid and a preset amount as a reception complete image as judged by the charge control unit 16. Then the CPU 24 controls the charging unit 16 to settle the transaction by discharging an amount of changes through the money discharge outlet 10DY placed on the front of the housing.

At this moment the CPU 24 generates a reception number by which to ascertain transmitting contents (images selected) with both the transmitting and receiving ends and prints the reception number and transmitting contents as a reception index IP, which is discharged through the card discharge outlet 10DX. The CPU then returns to the step SP1.

A given maintenance start operation is conducted on the CPU 24 by a serviceperson at the step SP2, and the CPU proceeds to the step SP25, terminating the operation processing procedure RT1.

The CPU 24 repeats loop operations in order: SP1 to SP13 or SP1 to SP4-SP8-SP6-SP7-SP9 to SP13, SP1 to SP7-SP14 to SP18 or SP1 to SP4-SP8-SP6-SP7-SP14 to SP18, or SP1 to SP7-SP19 to SP24 or SP1 to SP4-SP8-SP6-SP7-SP19 to SP24. In this way it is possible to print the image data D2 recorded on a recording medium prepared by the user and print images an the postcard or seal, selected by the user from among a plurality of images based on the image data D5 transmitted from another print service supply system PM₁ to PMₙ or print ordering device PN₁ to PNₙ. It is also possible to save the image data of selected images on the recording medium and transmit the image data of selected images to other print service supply systems.

The user is supposed to infant a receiving party of the reception number of the reception index obtained during the preceding operations and the memory number created by the user by the telephone or other means. The receiving party is supposed to go to a nearby site of a print service supply system PM₁ to PMₙ and is able to get a printing medium (postcard, seal, etc.) with the images printed on it based on the image data D5 transmitted or a recording medium with the image data D5 recorded on it.

### (2-4) Transmit processing procedure in the print service supply system

With a print service supply system PM₁ to PMₙ at the transmitting end in the standby state with no operation made by the user at the step SP1 of the operation processing procedure RT1 (that is, in a state wherein the initial image is displayed on the monitor 11A as shown in Fig 7), the CPU 24 starts executing the transmit processing procedure RT2 at the step SP30 and proceeds to the next step SP31.

At the step SP31 the CPU 24 searches for image data D5 standing by for transmission from among the image data stored in the transmit database on the hard disk drive 28 and proceeds to the next step 32 and judges if the image data D5 standing by for transmission is stored.

It an affirmative result is obtained at this step SP32, the CPU 24 proceeds to the step SP33 and is connected to a print service supply system PM₁ to PMₙ coinciding with the telephone number of a receiving end to which the image data D5 based on the searched result is sent.

When the line is connected to the print service supply system at the receiving end, the CPU 24 proceeds to the next step SP34 and sends the image data D5 and the corresponding reception number and memory number to a print service supply system at a receiving end through the terminal adapter unit 27, and then again proceeds to the step SP35, terminating the transmit processing procedure RT2.

If, however, a negative result is obtained at the step SP32, the CPU 24 returns to the stop 31 and stands by until image data D5 appears for transmission.

In this way, with the print service supply system PM₁ to PMₙ, it is possible to send the image data of an image selected by the user, standing by for transmission, to another print service supply system PM₁ to PMₙ.

### (2-5) Receive processing procedure in the print service supply system

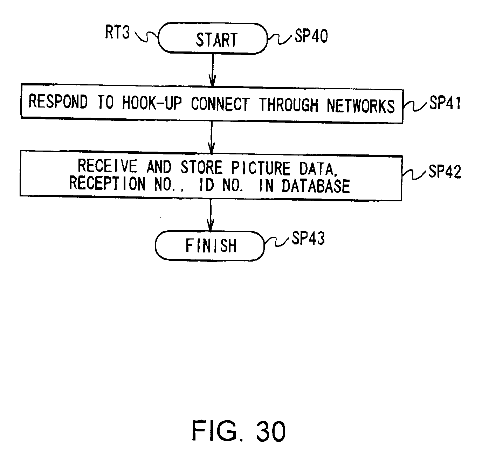

As to a print service supply system PM₁ to PMₙ at the receiving end, when the circuit connection is established by another print service supply system or print ordering device PN₁ to PNₙ, the CPU 24 starts executing a receive processing procedure RT3 shown in Fig.30 at the step SP40 and proceeds to the subsequent step SP41, where the CPU 24, responding to the established circuit connection, is hooked up with it through a print service supply system or print ordering device PN₁ to PNₙ and a network 2 (Fig.1), and then proceeds to the next step SP42.

The CPU 24 receives image data D5, a reception number and memory number sent from a transmitting end, which are stored into the receive database of the hard disk drive 28 and proceeds to the next step SP43, terminating the receive processing procedure RT3.

The image data D5 stored in the receive database on the hard disk drive 28 is erased automatically under the control of the CPU 24, if not perused in a given period of time (e.g. one month) preset freely by an operator of a print service supply system PM₁ to PMₙ so that the capacity of the receive database in the hard disk drive is restrained.

Thus, with the print service supply system PM₁ to PMₙ it is possible to receive image data transmitted from another print service supply system PM₁ to PMₙ or print ordering device PN₁ to PNₙ,

### (3) Configuration of print ordering device

### (3-1) External configuration

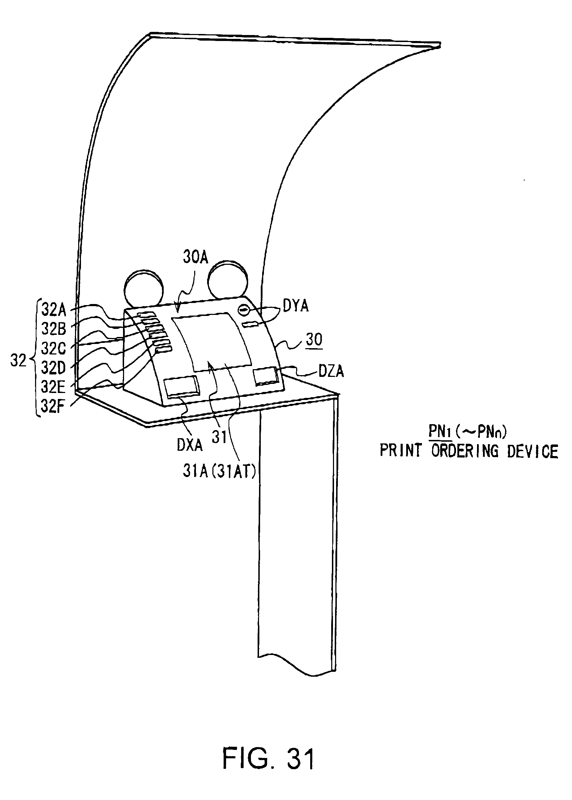

As shown in Fig.31, the print ordering device PN₁ to PNₙ comprises a monitor 31A with touch panel 31A of the display unit 31, media unit 32, receipt discharge outlet DXA, money payment inlet DYA and money discharge outlet DZA placed on the slanted upper front 30A of a housing 30.

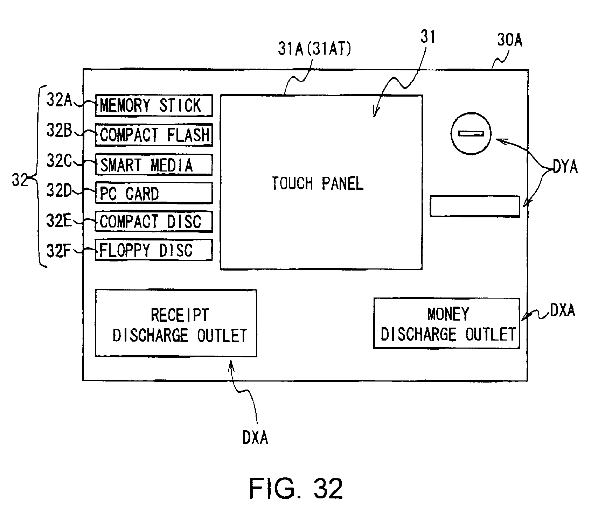

A media unit 32 is provided with a media insertion unit 32A to 32F corresponding to a plural different types of recording media (not shown in Fig.). As shown in Fig. 31 and Fig. 32, the corresponding parts have the same reference numerals. The media unit 32 is designed such that when the user inserts his recording medium into the corresponding medium insertion inlet 32A to 32F, the driver (not shown in Fig.) incorporated into the media insertion inlet 32A to 32F is set in motion to reproduce the recording medium.

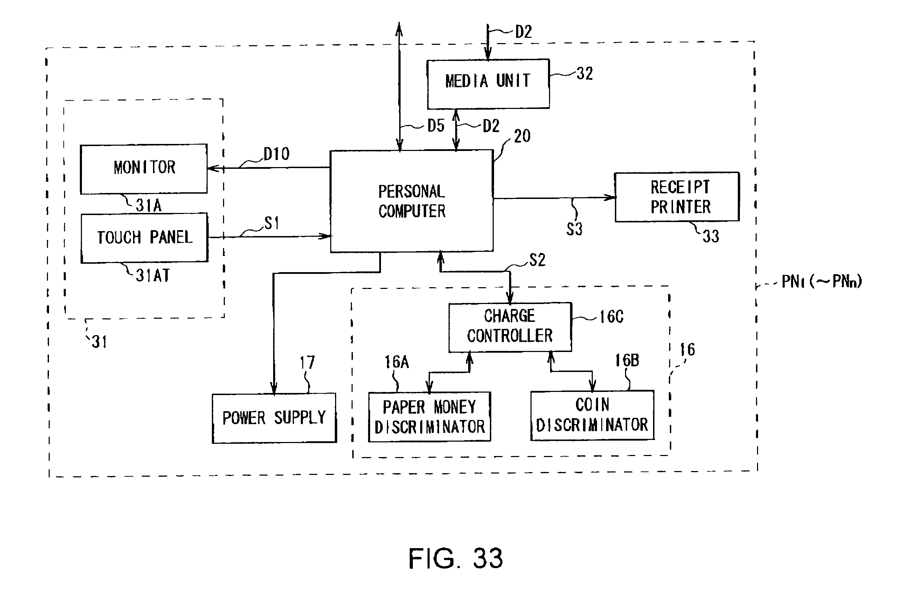

The receipt discharge outlet DXA, money payment inlet DYA and money discharge outlet DZA are formed at the position corresponding to a charging unit 16 (Fig.33, to be described later) inside the housing 30. The receipt issued by a receipt printer (Fig.33, to be described later) can be pulled out at the receipt discharge outlet DXA. Bill and coins can be put into or taken out of the charging unit 26 by way of the money payment inlet DYA and money discharge outlet DZA.

In this mode of carrying out invention, the housing 30 is connected with the network (Fig.1) by cable (not shown in Fig.) and is capable of communicating with other print ordering devices and print, ordering devices PN₁ to PNₙ each other.

### (3-2) Internal configuration

As shown in Fig.33, where the same reference numerals used for the corresponding parts in Fig.4, the print ordering device PN₁ to PNₙ is made to be almost similar to the print service supply system PM₁ to PM_{n,} except that a receipt printer 33 is formed in place of the operation unit 21 and the first and second printers 14, 15 (Fig.4).

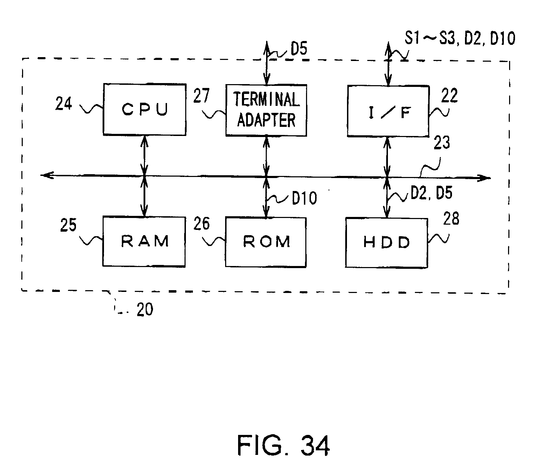

As shown in Fig 34, where the same reference numerals are used for the corresponding parts in Fig.5, a personal computer 20 is constructed to be almost similar to the personal computer 20 (Fig.5) of the print service supply system PM₁ to PMₙ. With a recording media inserted into the media insertion inlet 32A to 32F of the media unit 32 and commands keyed in by the user, the CPU 24 retrieves a working program retained in a ROM 26, which is then stored in the RAM 25 and starts executing operation processing based on the working program, retrieving from ROM 26 transmitting contents corresponding to the commands and image data indicating a procedure, which are fed to a monitor 31A by way of a bus 23 and an interface circuit 22 in order.

The CPU starts controlling the charging unit 16 when the user put bills and/or coins into the money payment inlet DZA of the housing 30. That is, the charge control unit 16C of the charging unit 16 is designed such that it is judged whether or not the total amount put in through the bill discriminator 16A and/or coin discriminator 16B is greater than the preset amount of the transmitting contents set on the touch panel 31A by the user.

The charge control unit 16 sends a charge recognition signal S2 to the CPU only when the total amount thrown in is greater than the amount set on the touch panel 31AT, and if the amount thrown in is greater than the amount set, a difference is discharged at the money discharging outlet DYA by way of the bill discriminator 16A and coin discriminator 16B.

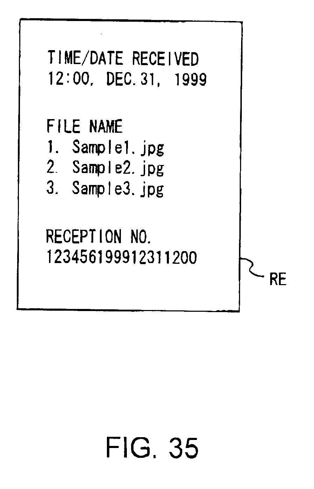

The CPU 24, according to a charge recognition signal S2, sends to the receipt printer 33 a receipt issuing signal S3 for issuing receipt RE with a data of reception, transmitted contents and reception number printed on it as shown in Fig. 35, and discharges a receipt based on the receipt issuing signal S3 through the receipt discharge outlet DXA, controlling the receipt printer 33.

Upon receiving the charge recognition signal S2, the CPU 24 starts executing processing operation corresponding to transmitting contents selected by the user. That is, the image data of an image selected by the user is transmitted through the terminal adapter 27 to a receiving end selected by the user.

At this moment the CPU 24 creates a backup of the image data D2 based on the recording medium inserted into each media unit 32A to 32F by once recording it on the hard disk 28. The recording medium inserted into the media insertion unit 32A to 32B is pulled out after the backup is completed.

The image data of an image selected by the user and retrieved from among images based on the image data D2 of the medium once retained on the hard disk drive 28, are sent to a print service supply system PM₁ to PMₙ appointed by the user as image data D5 for transmission through the terminal adapter 27.

### (3-3) Operation processing procedure in the print ordering device

In practice, with the print ordering device PN₁ to PNₙ the CPU 24 starts, at the step SP50, executing an operation processing procedure RT4 illustrated in Fig_{.}36, almost similar to the operation processing procedure RT1 in Fig.6 with a touch panel 31AT on the display unit 31 touched by the user. Then, if a user touches, through the touch panel 31AT at the step SP51, an initial image PM similar to one illustrated in Fig.7 and displayed on the monitor 31A of the display unit 31, the CPU 24 proceeds to the step SP52.

At this step SP52 the CPU 24 makes the monitor 31A display a service message to the effect 'Order printing from print service supply system'. Subsequently the CPU 24 makes the monitor 31A display icons IC5, IC6 as a template setting image PR2, which indicates whether or not an image similar to one in Fig.9 is used for synthesizing images.

When the icon IC5 is selected from the template setting image PF2, the CPU 24 proceeds to the next step SP53 and makes the monitor 31A display a template selection image (not shown in Fig.) consisting of icons representing a plurality of synthesizing templates.

When one of a plurality of templates is selected from the template selection image, the CPU 24 retains it in the RAM 2 temporarily and proceeds to the subsequent step SP54, leaving it for later use in utilizing a synthesized image based on it.

In case the icon IC6 is selected from among those on the template setting image PF2 at the step SP52, the CPU 24 proceeds to the SP54, without doing anything.

The CPU 24 processes operations at the steps SP54 to SP63 in exactly the same way as at the steps SP4 to SP7-SP19 to SP24 of the operation processing procedure RT1 (Fig.6), and then proceeds to the step SP51.

In this way the CPU 24 can transmit the image data of an image selected by the user to a print service supply system PM₁ to PMₙ appointed by the user, repeating the step SP51-SP63 operation in order.

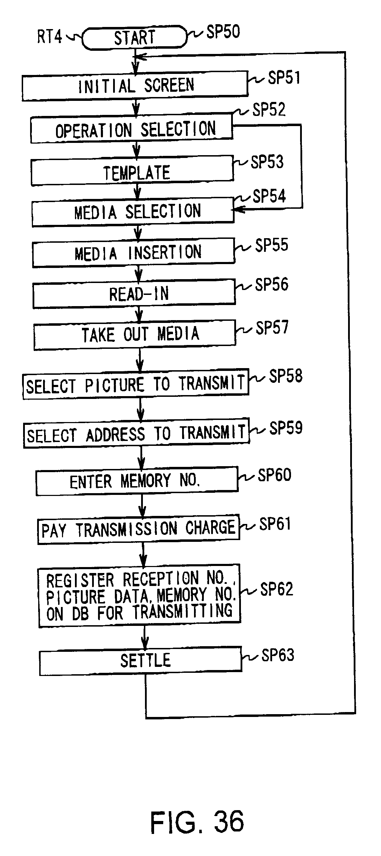

The user is supposed to inform a receiving party of the reception number of a receipt RE (Fig.36) issued and a memory number set by the user by the telephone, etc. The receiving party is supposed to visit a site where a print service supply system PM₁ to PMₙ is installed and execute operations suitable for entering the reception number and memory number informed beforehand in such a way as described before. In this way, the receiving party can obtain a printing medium (postcard, seal, etc.) with the image printed on it based on the image data D5 transmitted.

### (3-4) Transmission processing procedure in the print ordering device

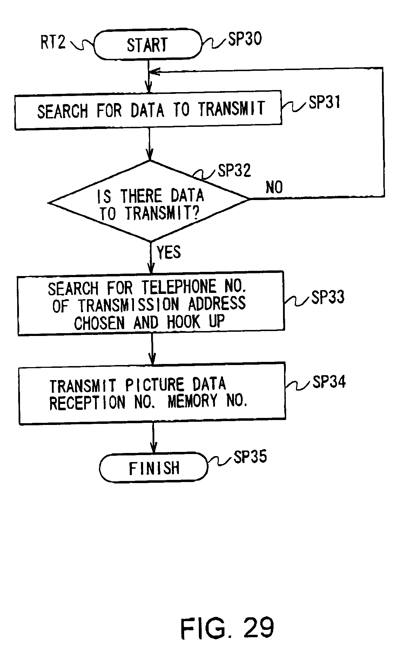

With a print ordering device PN₁ to PNₙ on standby with no operation executed by the user at the step SP51 of the operation processing procedure RT4 (Fig.36, that is, with the initial image PM shown in Fig.7 displayed on the monitor 31A), the CPU can transmit image data D5 selected by the user to a print service supply system PM₁ to PMₙ desired by the user by executing exactly the mains transmitting procedure as the transmitting processing procedure RT2 shown in Fig.29.

### (4) Operations and effects of the present embodiment

With the print system 1 configured as described heretofore, to transmit or receive the image data of a recording media to or from a person in a faraway place, a user is supposed to visit a nearby site where one of a plurality of print service supply systems PM₁ to PMₙ or print ordering devices PN₁ to PNₙ is installed and retrieve image data from the recording medium with the use of the print service supply system PM₁ to PMₙ or print ordering device PN₁ to PNₙ.

In case a plurality of images based on the image data are retrieved, the user selects a desired image and sends the image data of the image selected to a print service supply systems PM₁ to PMₙ appointed. The user is given the reception number and memory number at this stage, which should be informed of a receiving party.

A person in a remote place is supposed to visit a nearby site where a print service supply systems PM₁ to PMₙ is installed and carry out a given series of operations according to the reception number and memory number notified in advance. Consequently, the person in a remote place can obtain a printing medium with an image printed on it based on the image data transmitted or a recording medium to record the image data on the spot.

With the print system 1, therefore, it is not necessary for a person at a transmitting end to visit a photo shop twice; once to place an order for printing and later to pick it up, and yet to mail the recording medium with images or have it delivered. Neither is it necessary for both the persons at a transmitting end and in a remote place to buy computers and peripherals to build a network devoted to this purpose.

The user can also execute the printing of image data, recording or transmitting processes at the place where a print service supply systems PM₁ to PMₙ or print ordering devices PN₁ to PNₙ is installed, just by following the simple operations like making a selection or an appointment in order, according to a series of GUI images.

Consequently, with the print system 1 it can be easily realized to send or receive such image data to or from a person in a remote place. Also, the simultaneity between placing an order for printing and delivery can be substantially enhanced.

Furthermore, with the print service supply systems PM₁ to PMₙ or print ordering devices PN₁ to PNₙ, it can be confirmed in a series of transmitting operations whether or not the images transmitted by a person at transmitting end and received by a person in a remote place coincides with each other because a reception number and memory number are provided for the confirmation of transmitted contents and for security purposes respectively after the image data is transmitted. It is also possible to prevent the image data from being retrieved by the third parties.

Furthermore, since a plurality of template images are stored in the print service supply system PM₁ to PMₙ or print ordering device PN₁ to PNₙ, it is easy to synthesize a template image selected by the user from among a variety of template images retained with an image desired and brought in by the user, which obviates the necessity of the user buying a piece of application software for synthesizing processes.

With the print system 1 configured as described heretofore, it is realistically conceivable to distribute print service supply systems PM₁ to PMₙ or print ordering devices PN₁ to PNₙ widely across the nation, which are connected each other through the network 2, so that image data can be retrieved from the recording media and transmitted to any place appointed. The image data transferred are received, whose image is printed on the printing media or recorded on the recording media. In this way image data can be transmitted or received to or from a person in a remote place each other and the image based on the image data transferred can be printed or recorded on the spot, which enables placing an order for prints and delivery to be executed online. Thus, the printing system 1 can be realized that greatly increases the convenience in transmitting or receiving image data to or from a person in a remote place.

### (5) Other modes of carrying out the present invention

The foregoing embodiment is a case wherein the print service supply system PM₁ to PMₙ is applied as a printer system. However, the present invention is not limited to it, but is widely applicable to a variety of other printer devices as long as image data can be retrieved from the recording media and transmitted to a receiving end. Also, it is necessary that image data transmitted can be received and that pictures can be printed based on the image data.

Also, the foregoing embodiment is a case wherein the media unite 12 of the print service supply system PM₁ to PMₙ is applied as the first retrieving means for retrieving image data from the recording media, which must be able to be inserted into the inside of the media unit 12 through the insertion inlet 12AI to 12CI of the media insertion unit 12A to 12C, a part of the media unit 12. However, the present invention is not limited to it, but can be widely applicable to a variety of other retrieving means as long as retrieving means can reproduce image data from a plurality of various recording media.

Furthermore, the foregoing embodiment is a case wherein image data D2 is transmitted as the first image data retrieved from the recording media through the terminal adapter 27 under the control of the CPU 24 of the print service supply system PM₁ to PMₙ. However, the present invention is not limited to it, but can be widely applied to a variety of other transmitting means as long as transmitting means can transmit image data retrieved from the recording media to a receiving end.

Furthermore, the foregoing embodiment is a case wherein the receiving means is designed such that image data D5 is received as the second image data transmitted through the terminal adapter 27 under the control of the CPU 24 of the print service supply system PM₁ to PMₙ. However, the present invention is not limited to it, but can be applied widely to a variety of other receiving means as long as image data to be transmitted can be received by receiving means.

Furthermore, the foregoing embodiment is a case wherein receive data base stored in the hard disk drive 28 of the personal computer 20 of the print service supply system PM₁ to PMₙ as retaining means for retaining image data received as second image data by receiving means. However, the present invention is not limited to it, but can be applied widely to a variety of other retaining means as long as image data received by receiving means can be retained.

Furthermore, the foregoing embodiments is a case wherein image data D5 is retrieved, as second retrieving means for retrieving image data retained in the retaining means, from receive database in the hard disk drive 28 under the control of the CPU 24 of the personal computer 20 at the print service supply system PM₁ to PMₙ. However, the present invention is not limited to it, but can be applied widely to a variety of other retrieving means as long as image data can be retrieved from the retaining media when necessary.

Furthermore, the foregoing embodiment is a case wherein the first and second printers 14, 15 of the print service supply system PM₁ to PMₙ are used as printing means for printing an image on the printing medium based on image data retrieved from retaining moans. However, the present invention is not limited to it, but can be applied widely to a variety of other printing means as long as an image based on the image data can be printed on the printing medium.

Furthermore, the foregoing embodiment is a case wherein a reception number is entered with 18 digits as reception information. However, the present invention is not limited to it, but reception information cam also be composed of e.g. hiragana, katakana (both typical Japanese letters), alphabet, Greek letters, and mix of them as well as other arrays of digits than 18 digits as long as image data transmitted can be confirmed at both the transmitting and receiving ends.

Furthermore, the foregoing embodiment is a case wherein a reception number is entered, as the first input means for entering a reception number as reception information, using the reception number input image PF4 displayed on the monitor 11A of print service supply system PM₁ to PMₙ. However, the present invention is not limited to it, but can be applied widely to a variety of other inputting means as long as a preset reception number can be appointed and entered at a receiving end.

Furthermore, the foregoing embodiment is a case wherein 4 digits are entered as a password. However, the present invention is not limited to it, but the memory number can also be composed of e.g. hiragana, katakana (both typical Japanese letters), alphabet, Greek letters, marks and mix of them as well as other arrays of digits than 4 digits as long as it serves security purposes by preventing image data transferred from being retrieved freely by the third parties other than the parties concerned.

Furthermore, the foregoing is a case wherein a memory number is set, as second input means for entering a memory number as a password, with the use of the memory number setting image PF11 displayed on the monitor 11A of the print service supply system PM₁ to PMₙ and wherein a memory number is entered with the use of the memory number input image PF5. However, the present invention is not limited to it, but can be applied widely to a variety of other inputting means as long as a given memory number can be set at a transmitting end and the memory number preset at the transmitting end can be entered by the receiving end.

Furthermore, the foregoing embodiment is a case wherein the hard disk drive 28 of the personal computer 20 retains image data retrieved by each media insertion unit 12A to 12C, 32A to 32F of the print service supply system PM₁ to PMₙ or print ordering device PN₁ to PNₙ. However, the present invention is not limited to it, but a variety of other retaining means can be used as long as they are provided with capacity enough to store image data retrieved by recording media.

Furthermore, the foregoing embodiment is a case wherein, as to the media unit 12 of the print service supply systems PM₁ to PMₙ, each medium insertion unit 12A to 12C is exposed out of the upper part 10A of the housing 10. However, the present invention is not limited to it, but a lid, which can be opened or closed freely, can be provided for the media insertion unit 12A to 12C or insertion inlet so as to prevent a recording medium from being taken out mistakenly during backup operation.

Furthermore, the foregoing embodiment is a case wherein a PC card or floppy disk is used as recording means for recording a desired image at the step SP5 or SP15 of the operation processing procedure RT1 illustrated in Fig.6. However, the present invention is not limited to it, but a wide variety of other recording media such as a memory stick, compact flash, smart media, and compact disk, etc. can be used as long as they can capture images electronically by, for example, a digital still camera.

Furthermore, the foregoing embodiment is a case wherein a display unit for a personal computer obtained on the market is utilized as is, for the display unit 11 equipped with a monitor 11 for displaying an image based on the image data retrieved from the recording media of the print service supply system PM₁ to PMₙ, wherein the monitor 11 is housed in the housing 10 in a way that it is exposed out of the upper part 10A of the housing 10. However, the present invention is not limited to it, but a variety of other display units can be used as long as they can display images based on the image data retrieved form the recording media.

Furthermore, the foregoing embodiment is a case wherein each adjusting button can be linked with a hole 10AH in a way that holes, each having a given diameter, are formed at predetermined positions corresponding to a plurality of the adjusting buttons (not shown in Fig.) placed on the same plane as the monitor 11A on the upper part 10A of the housing 10 of the print service supply system PM₁ to PMₙ. However, a variety of other means can be used no long as a plurality of the adjusting buttons covered on the upper part 10A of the housing 10 can be pressed in from the outside.

Furthermore, the foregoing embodiment is a case wherein the external configuration of the print ordering devices PN₁ to PNₙ is structured with the housing 30 as shown in Fig.31. However, the present invention is not limited to it, but a variety of other equivalents can be used as the external configuration of the print ordering device PN₁ to PNₙ as long as they can retrieve image data from the recording media and transmit image data selected by the user from among the image data retrieved to a print service supply system PM₁ to PMₙ to be appointed.

According to the present invention described heretofore, the printing device comprises: first retrieving means for retrieving first image data from the recording medium installed; transmitting means for transmitting the first image data to a receiving end appointed; receiving means for receiving second image data to be transmitted: retaining means for retaining the second image data received by the receiving means; second retrieving means for retrieving, as required, the second image data retained in the retaining means; and printing means tor printing images based on the second image data retrieved from the retaining means by the second retrieving means.

As a result, since image data on the recording media can be transmitted to a receiving end appointed, transmission/reception to/from a person in a remote place can be carried out easily. Also, images based on the image data received can be printed on the spot, enabling printing ordering and delivery to be made online. Thus, the printing device can be realized that increases the convenience greatly in transmitting and/or receiving image data.

Also, according to the present invention, a network is established to connect a plurality of printer devices each other, each printing device comprising: first retrieving means for retrieving first image data from the recording medium installed; transmitting means for transmitting the first image data to a receiving end appointed; receiving means for receiving the second image data to be transmitted; retaining means for retaining the second image data received by the receiving means; second receiving means for retrieving, as required, the second image data retained in the retaining means; and printing means for printing images based on the second image data retrieved from the retaining means by the second retrieving means.

As a result, since image data on the recording media can be transmitted to a receiving end appointed, transmission/reception to/from a person in a remote place can be carried out easily. Also, images based on the image data received can be printed on the spot, enabling printing ordering and delivery to be made online. Thus, the printing device can be realized that increases the convenience greatly in transmitting and/or receiving image data.

Also, in the present invention, a printing method of a printer device comprises: a first retrieving step of retrieving first image data from a recording medium installed; a transmitting step of transmitting the first image data to an receiving end appointed; a receiving step of receiving second image data to be transmitted; a retaining step of retaining the second image data received; a second retrieving step of retrieving, as required, the second image data stored; and a printing step of printing images based on the second image data retrieved as required.

As a result, with the use of the printing method, image data on the recording medium can be transferred to a receiving end appointed beforehand, which makes it easier to transmit/receive to/from a person in a remote place. At the same time it is also possible to print pictures on the spot based on the image data received, which enables a print order and delivery to be carried out simultaneously.

Also, in the present invention, a printing method of a printer device comprises: a first retrieving step or retrieving first image data from a recording medium installed; a transmitting step of transmitting the first image data to an receiving end appointed; a receiving step of receiving second image data to be transmitted; a retaining step of retaining the second image data received; a second retrieving step of retrieving, as required, the second image data stored; and a printing step of printing images based on the second image data retrieved as required.

Thereby, image data on the recording media can be transmitted to a receiving end appointed beforehand, which enables a user to transmit/receive to/from a person more easily in a remote place, and pictures to be printed on the spot based on the image data received. Consequently a printing order and delivery can be done simultaneously. Thus, the printing method of a printing device can be realized that increases the convenience greatly in transmitting and/or receiving image data.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A printer device comprising:
a retrieving means for retrieving first image data from a recording medium installed;
a transmitting means for transmitting said first image data to an receiving end appointed;
a receiving means for receiving second image data to be transmitted;
a retaining means for retaining said second image data received by said receiving means;
second retrieving means for retrieving, as required, said second image data stored on said retaining means; and
a printing means for printing images based on said second image data retrieved from said retaining means by said second retrieving means.

2. The printer device according to claim 1 comprising:
the first input means for inputting reception information, and wherein
said transmitting means transmits said first image data with said reception information appended to it to said receiving end appointed; and
said second retrieving means retrieves said second image data from said retaining means when said reception information entered through said first input means coincides with said reception information appended to said second image data.

3. The printer device according to claim 2 comprising:
a second input means for entering a password, wherein
said transmitting means for transmitting said first image data including said password generated and entered by said second input means to said receiving end; and
said second retrieving means that retrieves said second image data from said retaining means when said password entered through said second input means coincides with said password included in said second image data.

4. The printer device according to claim 1, wherein
said receiving end comprising:
said first retrieving means for retrieving said image data from said recording medium installed;
said transmitting means for transmitting said first image data to a receiving address appointed;
said receiving means for receiving second image data to be transmitted;
said retaining means for retaining said image data received by said receiving means;
said second retrieving means for retrieving, as required, said second image data retained in said retaining means; and
said printing means for printing an image based on said second image data retrieved from said retaining means by said second retrieving means.

5. A printing system comprising:
a plurality of printer devices; and
a network that connects between each of said printing devices; and
each of said printing device comprising;
a first retrieving means for retrieving first image data from a recording device installed;
a transmitting means for transmitting said first image data to a receiving end appointed;
a receiving means for receiving second image data to be transmitted;
a retaining means tor retaining said second image data received by said receiving means;
a second retrieving means for retrieving, as required, said second image data retained in said retaining means; and
a printing means for printing images based on second image data retrieved from said retaining means by said second retrieving means.

6. The printing system according to claim 5 comprising:
a first input means for entering reception information,
wherein
said transmitting means transmits said first image data with reception information appended to it to said receiving end; and
said second retrieving means retrieves said second image data from said retaining means when said reception information entered through said first input means coincides with said reception information appended to said second image data.

7. The printing system according to claim 6 comprising:
a second input means for entering a password, wherein
said transmitting means for transmitting said password entered through said second input means, appended to said first image data; and
said second retrieving means for retrieving said second image data from said retaining means when said password entered through said input means coincides with said password appended to said second image data.

8. The printing system according to claim 5, wherein
said receiving end comprising:
said first retrieving means for retrieving said first image data from said recording medium installed;
said transmitting means for transmitting said first image data to a receiving end appointed;
said receiving means for receiving said second image data to be transmitted;
said retaining means for retaining said second image data received by said receiving means;
second retrieving means for retrieving, as required, said second image data retained in said retaining means; and
said printing means for printing said image based on said second image data retrieved from said retaining means by said second retrieving means.

9. A printing method of a printer device comprising:
a first retrieving step of retrieving first image data from a recording medium installed;
a transmitting step of transmitting said first image data to an receiving end appointed;
a receiving step of receiving second image data to be transmitted;
a retaining step of retaining said second image data received;
a second retrieving step of retrieving, as required, said second image data stored; and
a printing step of printing images based on said second image data retrieved as required.

10. The printing method of a printer device according to claim 9 comprising:
a first input step of inputting reception information, and
wherein
said transmitting step transmits said first image data with said reception information appended to it to said receiving end appointed; and
said second retrieving step retrieves said second image data when said reception information entered through said first input step coincides with said reception information appended to said second image data.

11. The printing method of printing device according to claim 10 comprising:
a second input step of entering a password, wherein
said transmitting step transmits said first image data including said password generated and entered by said second input step to said receiving end; and
said second retrieving step retrieves said second image data when said password entered through said second input step coincides with said password included in said second image data.

12. The printing method of a printer device according to claim 9, wherein
said receiving end comprising:
a first retrieving step of retrieving said image data from said recording medium installed;
a transmitting step of transmitting said first image data to a receiving address appointed;
a receiving step of receiving second image data to be transmitted;
a retaining step of retaining said second image data received;
a second retrieving step off retrieving, as required, said second image data retained; and
a printing step of printing an image based on said second image data retrieved as required.
